# EUROPÄISCHE PATENTSCHRIFT

(11) **EP 3 320 275 B1**
(45) Veröffentlichungstag und Bekanntmachung des Hinweises auf die Patenterteilung: **25.09.2019**
(21) Anmeldenummer: 16725056.2
(22) Anmeldetag: 10.05.2016
(51) Int. Cl.: F24S 20/63, F24S 50/80, E06B 9/264, F24D 3/14

(54) **AKTIVES FENSTERMODUL ZUR THERMISCHEN REGULIERUNG EINES GEBÄUDES UND VERFAHREN**
ACTIVE WINDOW MODULE FOR THERMALLY REGULATING A BUILDING AND METHOD
MODULE DE FENÊTRE ACTIF SERVANT À LA RÉGULATION THERMIQUE D'UN BÂTIMENT, ET PROCÉDÉ

(30) Priorität: 10.07.2015 DE 102015212924
(43) Veröffentlichungstag der Anmeldung: 16.05.2018
(73) Patentinhaber: Hywin GmbH, 8832 Wollerau (SZ) (CH)
(72) Erfinder: MEISSER, Claudio, 6330 Cham (ZG) (CH); LIPTON, Jan, 8816 Hirzel (ZH) (CH)
(74) Vertreter: Fink Numrich Patentanwälte PartmbB
(86) Internationale Anmeldenummer: PCT/EP2016/060378
(87) Internationale Veröffentlichungsnummer: WO 2017/008933

(56) Entgegenhaltungen:
- DE-A1-102009 036 891
- DE-B- 1 255 890
- JP-A- S60 120 143
- US-A- 3 590 913
- US-A- 4 090 497
- US-A1- 2012 234 033

## Beschreibung

Die Erfindung betrifft ein Fenstermodul zur thermischen Regulierung, umfassend ein Beheizen oder Kühlen, eines Gebäudes, wobei das Fenstermodul eine Außenverglasung und eine Innenverglasung sowie zumindest einen Luft-Flüssigkeit-Wärmetauscher umfasst. Zwischen der Außenverglasung und der Innenverglasung ist ein gegenüber Feststoffen, insbesondere Staub, abgedichteter Zwischenraum gebildet. Die Außenverglasung weist einen kleineren Wärmedurchgangskoeffizient als die Innenverglasung auf. Der zumindest eine Luft-Flüssigkeit-Wärmetauscher ist im Einbauzustand des Fenstermoduls unten und/oder oben, horizontal liegend, in dem Zwischenraum angeordnet, so dass er von Luft aus dem Zwischenraum durchströmbar ist. In dem Zwischenraum ist ein Trennelement angeordnet.

Glasfassaden sind eine heute übliche Variante der Fassadenkonstruktion von Hochhäusern. Glasfassaden bieten einen großen architektonischen Freiraum und erlauben darüber hinaus helle, Licht durchflutete Räume. Eine große verglaste Fassade von Hochhäusern erhöht deren Wärmeaufnahme im Sommer, besonders, wenn das Haus frei steht und damit an sonnigen Tagen viel Sonnenenergie einfängt. Dies und der mechanische Luftaustausch führen, im Vergleich zu anderen Gebäudetypen, oft zu einem hohen Verbrauch von Energie für deren Klimatisierung. Seit einiger Zeit wird versucht, durch bauliche und klimatechnische Maßnahmen die Energiebilanz der Gebäude zu verbessern.

Zur Kontrolle der Sonneneinstrahlung gibt es unterschiedliche Lösungen, welche verschiedene Vor- und Nachteile aufweisen. Eine erste Variante weist auf der Außenseite einer Isolierverglasung Sonnenstoren, z.B. Jalousien, auf. Mit Hilfe der Sonnenstoren kann die Einstrahlung in das Innere des Gebäudes unterbunden oder zumindest verringert werden. Ein Nachteil besteht darin, dass die Sonnenstoren schnell verschmutzen und deren Reinigung hohe Kosten verursacht. Darüber hinaus besteht die Gefahr der Zerstörung durch Winde oder Hagel. Bei Hochhäusern über zehn Stockwerken kommen außenliegende Sonnenschutzvorrichtungen praktisch nicht mehr zur Anwendung.

Eine diese Problematik vermeidende zweite Variante sieht den Sonnenschutz auf der Innenseite der Isolierverglasung vor. Dadurch sind die im Nutzraum liegenden Sonnenstoren geschützt. Energetisch ist diese Lösung jedoch mit Nachteilen verbunden. Die im Nutzraum platzierten Sonnenstoren heizen sich bei Sonnenstrahlung auf und wirken dadurch als zusätzliche Heizung. Diese Wärme muss von einer Klimaanlage des Gebäudes abgeführt werden. Dies macht es erforderlich, die Klimaanlage überzudimensionieren, was neben dem höheren Energieverbrauch auch dem Komfort im Innenraum abträglich ist.

Eine dritte Variante verbessert das in der ersten Variante beschriebene Prinzip dadurch, dass die auf der Klimaseite einer Isolierverglasung vorgesehenen Sonnenstoren durch eine zusätzliche, vorgesetzte Glasfassade geschützt sind (Schutzfassade). Hierdurch ist ein Schutz der Sonnenstoren vor Wind und Hagel gegeben. Zwischen den beiden Fassaden entsteht eine starke, natürliche Konvektion, welche die Überhitzung der Fassade verhindert. Ein Nachteil dieser Variante besteht darin, dass die zusätzliche Fassade sehr teuer ist und viel Raum benötigt. Insbesondere muss der Zwischenraum zwischen der Schutzfassade und der Nutzraumverglasung begehbar sein, um eine Reinigung der Glasscheiben zu ermöglichen sowie eventuelle Reparaturen der Sonnenstoren durchführen zu können. Dadurch und durch Reinigung der zusätzlichen Glasfläche innen und außen sind die Unterhaltskosten sehr hoch.

In einer vierten Variante werden vorgefertigte Fensterboxen mit integrierten Sonnenstoren verwendet. Diese Variante ist als "Closed Cavity Facade (CCF)" bekannt. Bei dieser Variante sind die Sonnenstoren auf der Außenseite einer, dem Nutzraum zugewandten Isolierverglasung angeordnet, wobei die Sonnenstoren durch eine außenliegende einfache Verglasung vor Wind und Witterung geschützt sind. Der zwischen der Innen- und der Außenverglasung gebildete Zwischenraum ist gegenüber der Umgebung abgedichtet, wodurch sich im Zwischenraum sehr hohe Temperaturen in Folge der Sonneneinstrahlung entwickeln. Die Temperaturen können bis zu 100 °C betragen. Derartig hohe Temperaturen sind nachteilig für die Sonnenstore und ihren Mechanismus. Das Eindringen der Wärme ins Innere des Gebäudes wird durch die aufwändige Isolierverglasung auf der Nutzraumseite limitiert, kann jedoch nicht komplett unterbunden werden. Darüber hinaus ist es erforderlich, den Zwischenraum mit trockener Druckluft zu versorgen, um Kondensation im Zwischenraum auszuschließen.

Luftaustausch (Lufthygiene) und allfällige Kühlung der Nutzräume erfolgt bei den vorgenannten vier Varianten über Klimaanlagen. Für die Heizung der Nutzräume können - unabhängig vom Aufbau der Fassade - sog. Erdsondenfelder verwendet werden. Diese liefern Wärmeenergie aus dem Erdinneren. Hierdurch soll der Verbrauch teurer, herkömmlicher Energieträger, wie z.B. Öl oder Gas, begrenzt oder sogar vermieden werden.

Aus der DE 10 2012 017 211 A1 ist ein Gebäudemodul, insbesondere ein Fassadenmodul, bekannt, welches die Nutzung von Sonnenenergie in Gestalt von thermischer Energie ermöglicht. Dazu wird vorgeschlagen, zwischen einer Innenscheibe und einer Außenscheibe in einem Zwischenraum ein Wärmeübertragungselement in Gestalt eines Absorberelements anzuordnen, der eine Funktionsfläche zum Absorbieren von Wärmestrahlung und/oder zum Temperieren des Zwischenraums aufweist. Eine Fluidleitung, in der ein Wärmetransportmedium geführt ist, ermöglicht einen thermischen Kontakt zwischen dem Wärmeübertragungselement und dem Wärmetransportmedium, um Wärme zwischen dem Wärmeübertragungselement und dem Wärmetransportmedium auszutauschen. Die Funktionsfläche und die Fluidleitung mit dem thermischen Kontakt sind dabei, in Blickrichtung durch ein Fenster gesehen, übereinander angeordnet. Eine derartige Anordnung ist prinzipiell auch als Fenstermodul nutzbar, jedoch wird der Durchblick durch die in dem Zwischenraum zwischen Innenscheibe und Außenscheibe angeordneten Wärmeübertragungselemente eingeschränkt. Da der Wärmeübergang zwischen der erwärmten Luft und dem Wärmeabsorber ungenügend ist, wird die Temperatur der Luft kaum reduziert. Das Gebäudemodul wirkt damit lediglich als Energieabsorber für die auf die Absorberelemente fallende Strahlung.

Die DE 1 255 890 A offenbart einen Hohlplatten-Heizkörper in Gestalt eines Fassadenelements. Bei diesem bilden ebene Glasplatten Vorder- und Rückwand eines allseits geschlossenen Heizkörperhohlraums, in dem Luft durch im Hohlraumunterteil befestigte Lamellenheizrohre erhitzt und durch geneigte Leitplatten oder eine lotrechte, ungefähr in der Heizkörpermitte befestigte Glasscheibe die Konvektionsluft entlang der Nutzraumverglasung im Kreislauf geführt wird.

Die US 4,090,497 A offenbart ein Fenstermodul für ein solares Energiesystem, bei dem die im Zwischenraum des Fenstermoduls zwischen der Innenverglasung und der Außenverglasung eingefangene Wärme einem externen Wärmetauschersystem zugeführt wird. Die dem externen Wärmetauschersystem zugeführte Wärme wird einer Einheit zum Erwärmen oder Kühlen des Gebäudeinnenraums zugeführt. Hierzu ist die Einheit mit einem von dem Fenstermodul getrennten Verteilsystem, umfassend Leitungen, Strahlkörper und dergleichen, verbunden.

Die JP S60 120 143 A offenbart ein Fenstermodul, bei dem die in dem Zwischenraum des Fenstermoduls anfallende Wärme unmittelbar mittels eines Gebläses dem Zwischenraum entnommen und in einen zu erwärmenden Nutzraum geführt wird.

Es ist Aufgabe der Erfindung, ein Fenstermodul anzugeben, welches nicht nur die Beheizung eines Gebäudes ermöglicht, sondern allgemein eine thermische Regulierung, d.h. ein Beheizen oder Kühlen, eines Gebäudes auf effiziente Weise erlaubt. Das Fenstermodul soll dabei mit geringem technischem Aufwand bereitstellbar sein.

Es ist ferner Aufgabe der Erfindung, ein Verfahren anzugeben, welches die thermische Regulierung eines Gebäudes mittels eines Fenstermoduls erlaubt.

Eine weitere Aufgabe der Erfindung besteht darin, ein Kühl- und Heizsystem für Gebäude mit einem Fenstermodul anzugeben, welches auf einfache Weise die thermische Regulierung eines Gebäudes ermöglicht.

Diese Aufgaben werden gelöst durch ein Fenstermodul gemäß den Merkmalen des Anspruches 1, ein Verfahren gemäß den Merkmalen des Patentanspruches 11 und ein Kühl- und Heizsystem für Gebäude gemäß den Merkmalen des Patentanspruches 15. Vorteilhafte Ausgestaltungen finden sich in den abhängigen Patentansprüchen.

Zur Lösung der Aufgabe wird ein Fenstermodul zur thermischen Regulierung eines Gebäudes vorgeschlagen. Das Fenstermodul umfasst eine Außenverglasung und eine Innenverglasung, wobei zwischen der Außenverglasung und der Innenverglasung ein gegenüber Feststoffen, insbesondere Staub, abgedichteter Zwischenraum gebildet ist. Zur Vermeidung von Kondensation sollte der Zwischenraum gegenüber der Wetterseite hermetisch dicht, gegenüber dem Nutzraum diffusionsoffen sein. Insbesondere kann der Zwischenraum mit Luft gefüllt sein. Ferner umfasst das Fenstermodul zumindest einen Luft-Flüssigkeit-Wärmetauscher, der ein fluiddurchströmtes Kühl-/Heizelement mit einer Fluidleitung, in der ein Wärmetransportmedium geführt ist, umfasst, wobei der zumindest eine Luft-Flüssigkeit-Wärmetauscher im Einbauzustand des Fenstermoduls oben, horizontal liegend, in dem Zwischenraum angeordnet ist, so dass er von Luft aus dem Zwischenraum durchströmbar ist. Weiter umfasst das Fenstermodul ein in dem Zwischenraum angeordnetes Trennelement, das eine verstellbare Sonnenschutzfunktion umfasst, die bei ihrer Aktivierung im Wesentlichen parallel zu der Außenverglasung und der Innenverglasung verläuft und den Zwischenraum in einen inneren Zwischenraum und einen äußeren Zwischenraum unterteilt, um eine steigende und eine fallende Luftströmung in dem Zwischenraum zu erzeugen und zu trennen, wobei die Sonnenschutzfunktion in dem Kühlbetrieb aktivierbar und in dem Heizbetrieb deaktivierbar ist.

Das Fenstermodul zeichnet sich dadurch aus, dass die Außenverglasung einen kleineren Wärmedurchgangskoeffizient als die Innenverglasung aufweist, um über die Innenverglasung das Gebäudeinnere thermisch zu regulieren. Der zumindest eine Luft-Flüssigkeit-Wärmetauscher kann im Einbauzustand des Fenstermoduls alternativ oder zusätzlich unten, horizontal liegend, in dem Zwischenraum angeordnet sein. Ferner ist zumindest ein Lüfter in dem Zwischenraum angeordnet, der in mehreren Betriebsmodi des Fenstermoduls, die einen Kühlbetrieb und einen Heizbetrieb umfassen, betreibbar ist. Zumindest in dem Kühlbetrieb wird durch den zumindest einen Lüfter Luft durch den zumindest einen Luft-Flüssigkeit-Wärmetauscher geführt, um Wärme zwischen der Luft und dem Wärmetransportmedium auszutauschen und die Luft in dem Zwischenraum in einem

Kreislauf zu führen. Das Trennelement umfasst eine verstellbare Sonnenschutzfunktion, die bei ihrer Aktivierung im Wesentlichen parallel zu der Außenverglasung und der Innenverglasung verläuft und den Zwischenraum in einen inneren Zwischenraum und einen äußeren Zwischenraum unterteilt, um eine steigende und eine fallende Luftströmung in dem Zwischenraum zu erzeugen und zu trennen, wobei die Sonnenschutzfunktion in dem Kühlbetrieb aktivierbar und in dem Heizbetrieb deaktivierbar ist.

Das dem vorgeschlagenen Fenstermodul zu Grunde liegende Prinzip besteht darin, Wärme zwischen der Luft in dem Zwischenraum und dem Wärmetransportmedium, das in dem Luft-Flüssigkeit-Wärmetauscher strömt, auszutauschen. Je nach Temperatur des Wärmetransportmediums kann die Luft dann gekühlt oder erwärmt werden. Mit der gekühlten oder erwärmten Luft kann über die Innenverglasung das Gebäudeinnere, nachfolgend auch als konditionierter Nutzraum bezeichnet, thermisch reguliert werden.

Die Außenverglasung stellt eine hochisolierende Verglasung dar, die das Fenstermodul und das Gebäudeinnere gegenüber der Außenumgebung isoliert. Demgegenüber ist die Innenverglasung eine einfache Verglasung oder eine Sicherheitsverglasung, da aufgrund der kontrollierten Temperatur in dem Zwischenraum des Fenstermoduls kleine Wärmemengen abgegeben oder aufgenommen werden. Dadurch, dass die Außenverglasung die hochisolierende Verglasung ist, ermöglicht das Fenstermodul die thermische Regulierung des Gebäudes. Der Unterschied zwischen dem Wärmedurchgangskoeffizienten Uₐ der Außenverglasung und Uᵢ der Innenverglasung kann, je nachdem, ob das Fenstermodul nur zum Kühlen oder auch zusätzlich zum Heizen verwendet werden soll, mindestens um den Faktor 3, insbesondere um den Faktor 5 oder mehr, kleiner als der Wärmedurchgangskoeffizient Uᵢ der Innenverglasung sein.

Die Funktion des Trennelements mit der verstellbaren Sonnenschutzfunktion besteht dabei darin, den Zwischenraum in den inneren Zwischenraum und den äußeren Zwischenraum unterteilen zu können, um zumindest im Kühlbetrieb eine steigende und eine fallende Luftströmung in dem Zwischenraum zu ermöglichen. Im Kühlbetrieb ist diese Trennung zwischen innerem und äußerem Zwischenraum notwendig, im Heizbetrieb vorteilhaft, jedoch nicht zwingend erforderlich.

Das Trennelement ermöglicht bei aktivierten Sonnenschutzfunktionen z.B. in Gestalt eines Rollos, einer Jalousie oder eines textilen Vorhangs, den Kühlbetrieb des Fenstermoduls. Bei aktivierter Sonnenschutzfunktion ist der Zwischenraum in dem inneren und dem äußeren Zwischenraum unterteilt. Die Unterteilung kann durch die Sonnenschutzfunktion selbst erreicht sein. Die Sonnenschutzfunktion dient ferner dazu, die Einstrahlung von Sonnenlicht in das Gebäudeinnere zu regulieren, indem das Maß der Überdeckung mit dem Fensterlicht automatisch oder durch einen Nutzer eingestellt wird, wodurch die Tageslichtstärke in dem Nutzraum einstellbar ist. Bei aktivierter Sonnenschutzfunktion werden die in dem Zwischenraum angeordneten Komponenten der Sonnenschutzfunktion, ebenso wie Rahmenelemente des Fenstermoduls, durch die Sonneneinstrahlung erwärmt, wodurch Wärme an die Luft insbesondere im äußeren Zwischenraum des Fenstermoduls abgegeben wird. Die erwärmte Luft wird mit Hilfe eines oder mehrerer Lüfter in dem Zwischenraum des Fenstermoduls in einem Kreislauf geführt, wobei die erwärmte Luft durch den zumindest einen Luft-Flüssigkeit-Wärmetauscher geführt wird. Über den Luft-Flüssigkeit-Wärmetauscher wird dabei Wärme an das Wärmetransportmedium des Luft-Flüssigkeit-Wärmetauschers abgegeben und die kalte Luft in den inneren Zwischenraum geführt. Dadurch wird die durch Sonnenstrahlung im Zwischenraum des Fenstermoduls erzeugte Wärme abgeführt. Wird die Temperatur der Luft in dem inneren Zwischenraum unter die Temperatur im Gebäudeinneren gebracht, so kann das Gebäudeinnere gekühlt werden. Der Lüfter wird für den Kühlbetrieb immer benötigt.

Durch das vorgeschlagene Fenstermodul wird zum einen das Problem der Überhitzung des geschlossenen Fensterraumes, wie dieses bei der eingangs erwähnten Closed Cavity Facade (CCF) auftritt, vollständig gelöst. Dadurch, dass der Zwischenraum lediglich gegenüber Feststoffen, insbesondere Staub, abgedichtet zu sein braucht, ansonsten jedoch gegenüber Nutzraum diffusionsoffen ist, entfällt die Zuführung von getrockneter Luft zur Vermeidung von Kondensation im Zwischenraum des Fensters. Dies vereinfacht den konstruktiven Aufbau des Fenstermoduls erheblich und spart beträchtliche Kosten für die Bereitstellung von getrockneter Luft mit geringem Überdruck.

Darüber hinaus kann das Fenstermodul nicht nur zur Kühlung des Zwischenraums, sondern auch in kalten Perioden zur Beheizung der Nutzräume verwendet werden, indem die Temperatur der Luft in dem Zwischenraum über die Temperatur im Gebäudeinneren erhöht wird. Die durch den Luft-Flüssigkeit-Wärmetauscher erwärmte Luft kann bei aktivierter oder deaktivierter Sonnenschutzfunktion basierend auf natürlicher Konvektion (d.h. ohne den zumindest einen Lüfter zu betreiben) an der Innenverglasung aufsteigen und Wärme an den Nutzraum abgeben. Optional kann mit Hilfe des zumindest einen Lüfters Luft aus dem Zwischenraum durch den zumindest einen Luft-Flüssigkeit-Wärmetauscher gezielt geführt werden, um Wärme zwischen der Luft und dem Wärmetransportmedium auszutauschen und um die Luft in dem Zwischenraum in einem Kreislauf zu führen. Beim Heizbetrieb mit Lüfter ist die Trennung zwischen äußerem und innerem Zwischenraum zweckmäßig. Mit Hilfe des Lüfters kann die an den Nutzraum zu übertragende Wärmemenge im Vergleich zum Konvektionsprinzip auf einfachere Weise eingestellt werden.

Gemäß einer zweckmäßigen Ausgestaltung ist der zwischen der Außenverglasung und der Innenverglasung gebildete Zwischenraum größer als 150 mm, um ein ausreichendes Volumen an Luft in dem Zwischenraum in einem Kreislauf führen zu können.

Die Außenverglasung und die Innenverglasung sind mittels Rahmenelementen miteinander verbunden, die zusammen einen Rahmen des Fenstermoduls bilden, wobei der Luft-Flüssigkeit-Wärmetauscher im Einbauzustand des Fenstermoduls unten und/oder oben, horizontal liegend, angeordnet ist. Diese Ausgestaltung ermöglicht es auch, dass das Fenstermodul im Bereich der Verglasung keinerlei Sichtbarrieren aufweist. Das Maß des Sonneneinfalls kann ausschließlich über die Sonnenschutzfunktion des Trennelements festgelegt werden, welche es erlaubt, durch Verstellung das Maß der Überdeckung mit dem Fensterlicht zu regulieren.

Gemäß einer weiteren zweckmäßigen Ausgestaltung wird durch das Trennelement der aus dem Luft-Flüssigkeit-Wärmetauscher austretende Luftstrom in den inneren Zwischenraum geführt, um über den äußeren Zwischenraum zurückgeführt zu werden. Da die Innenverglasung einen großen Wärmedurchgangskoeffizient aufweist, kann aufgrund der kontrollierten Temperatur in dem inneren Zwischenraum des Fenstermoduls ein erwünschtes Maß an Wärme oder Kälte zum Nutzraum hin abgegeben werden.

Gemäß einer weiteren zweckmäßigen Ausgestaltung umfasst das Trennelement eine Sonnenschutzvorrichtung aus einem Sonnenstrahlung absorbierenden und reflektierenden Material, die derart verstellbar ist, dass die Tageslichtstärke im Nutzraum einstellbar ist. Die Sonnenschutzvorrichtung kann beispielsweise als Rollo, Doppelrollo, Jalousie, textiler Vorhang und dergleichen ausgeführt sein. Das Trennelement kann eine feststehende transparente Trennwand, z.B. in Gestalt einer Glasscheibe oder Folie, umfassen, die zwischen der Sonnenschutzvorrichtung und der Innenverglasung parallel beabstandet zu der Innenverglasung angeordnet ist. Das Trennelement selbst wird dabei beim Blick durch das Fenstermodul durch einen Nutzer nicht wahrgenommen. Insbesondere erstreckt sich das Trennelement über die gesamte Breite des Fenstermoduls, so dass die erwünschte Zirkulation des Luftstroms ohne seitlichen Bypass oder "Kurzschluss" erfolgen kann.

Ebenso wie sich das Trennelement bevorzugt über die gesamte Breite des Fenstermoduls erstreckt, ist es zweckmäßig, wenn der Luft-Flüssigkeit-Wärmetauscher sich über die gesamte Breite des Fenstermoduls erstreckt. Der Luft-Flüssigkeit-Wärmetauscher kann hydraulisch vorzugsweise seriell verschaltete Rippenrohre umfassen. Der Luft-Flüssigkeit-Wärmetauscher liegt bevorzugt außerhalb des Sichtbereichs, im Bereich des Bodens und/oder der Decke des Fenstermoduls.

Gemäß einer weiteren zweckmäßigen Ausgestaltung ist der zumindest eine Lüfter im Einbauzustand des Fenstermoduls unten und/oder oben in dem Zwischenraum und in Strömungsrichtung vor dem Luft-Flüssigkeit-Wärmetauscher angeordnet. Der oder die Lüfter können ein oder mehrere Radial-, Axial- oder Diagonallüfter oder Querstromgebläse sein. Durch die Einbausituation kann der Wärmeübergang aufgrund der hierbei erzeugten turbulenten Strömung verbessert werden.

Gemäß einer weiteren zweckmäßigen Ausgestaltung ist der von dem zumindest einen Lüfter in dem inneren oder äußeren Zwischenraum forcierte Luftstrom im Kühlbetrieb und/oder im Heizbetrieb ein Luftstrom entgegen dem natürlichen Auftrieb. Insbesondere wird hierdurch eine Kühlung bei untenliegendem Wärmetauscher ermöglicht, wodurch der Heizbetrieb mit keiner oder geringer Lüfterleistung möglich ist. Eine weitere zweckmäßige Ausgestaltung sieht vor, dass der Zwischenraum gegenüber dem konditionierten Nutzraum diffusionsoffen konstruiert ist, wie bereits erwähnt wurde.

Gemäß einer weiteren Ausgestaltung kann der Fluidleitung ein Wärmespeicher zugeordnet sein, um Wärme von dem Wärmetransportmedium aufzunehmen und zu speichern oder gespeicherte Wärme an das Wärmetransportmedium abzugeben. Der Wärmespeicher kann ein Anergiespeicher, wie z.B. ein Erdsondenfeld, sein, der optional über einen Wärmetauscher an das Wärmetransportmedium angebunden ist. Wahlweise kann zwischen dem Fenstermodul und dem Wärmespeicher eine Wärmepumpe angeordnet sein, die zur Kühlung oder zur Heizung oder umschaltbar für beide Betriebsarten genutzt werden kann.

Erdsondenfelder liefern Wärmeenergie aus dem Erdinneren. Aus Erfahrung weiß man, dass die Erdsondenfelder durch die Energieentnahme über Jahre auskühlen, so dass die Effizienz der die Erdsondenfelder nutzenden Wärmepumpen abnimmt und in schlechten Betriebszuständen arbeiten muss. Durch das vorgeschlagene Fenstermodul ist es möglich, Wärme im Erdsondenfeld zu speichern, d.h. diese zu regenerieren. Dies wird unter Ausnutzung solarer Wärme aus den Fenstermodulen ermöglicht.

Die Aufgabe wird ferner durch ein Verfahren zur thermischen Regulierung eines Gebäudes mittels eines Fenstermoduls gelöst, wobei das Fenstermodul Folgendes umfasst: eine Außenverglasung und eine Innenverglasung, wobei zwischen der Außenverglasung, die einen kleineren Wärmedurchgangskoeffizient als die Innenverglasung aufweist, und der Innenverglasung ein gegenüber Feststoffen, insbesondere Staub, abgedichteter Zwischenraum gebildet ist. Das Fenstermodul umfasst weiter einen Luft-Flüssigkeit-Wärmetauscher, der ein fluiddurchströmtes Kühl-/Heizelement mit einer Fluidleitung, in der ein Wärmetransportmedium geführt ist, umfasst, wobei der zumindest eine Luft-Flüssigkeit-Wärmetauscher im Einbauzustand des Fenstermoduls unten und/oder oben, horizontal liegend, in dem Zwischenraum angeordnet ist, so dass er von Luft aus dem Zwischenraum durchströmbar ist. Schließlich umfasst das Fenstermodul ein in dem Zwischenraum angeordnetes Trennelement, das eine verstellbare Sonnenschutzfunktion und vorteilhafterweise eine transparente Trennwand umfasst, die den Zwischenraum in einen inneren Zwischenraum und einen äußeren Zwischenraum unterteilen. In dem Zwischenraum ist zumindest ein Lüfter angeordnet, der in mehreren Betriebsmodi des Fenstermoduls, die einen Kühlbetrieb und einen Heizbetrieb umfassen, betreibbar ist. Erfindungsgemäß wird zumindest in dem Kühlbetrieb durch den zumindest einen Lüfter Luft durch den zumindest einen Luft-Flüssigkeit-Wärmetauscher geführt, um Wärme zwischen der Luft und dem Wärmetransportmedium auszutauschen und um die Luft in dem Zwischenraum in einem Kreislauf zu führen. Die Sonnenschutzfunktion wird in dem Kühlbetrieb aktiviert, so dass diese im Wesentlichen parallel zu der Außenverglasung und der Innenverglasung zur Trennung der steigenden und der fallenden Luftströmung in dem Zwischenraum verläuft. In dem Heizbetrieb wird die Sonnenschutzfunktion üblicherweise deaktiviert.

Das Verfahren weist die gleichen Vorteile auf, wie diese vorstehend bereits in Verbindung mit dem erfindungsgemäßen Fenstermodul beschrieben wurden.

In einer zweckmäßigen Ausgestaltung wird in dem Kühlbetrieb durch das Wärmetransportmedium der Luft aus dem Fenstermodul Wärme entzogen, die über einen Wärmetauscher zur Regenerierung eines Wärmespeichers, insbesondere eines Anergiespeichers, genutzt wird. Unter der Regenerierung des Wärmespeichers ist die Zufuhr von thermischer Energie zu dem Wärmespeicher zu verstehen. Alternativ kann in einem Heizbetrieb über das Wärmetransportmedium einem Wärmespeicher Wärme entzogen, mittels einer Wärmepumpe auf die notwendige Temperatur gebracht und an die Luft in dem Fenstermodul abgegeben werden.

Im Ergebnis ergeben sich hierdurch drei Betriebsarten: zum einen kann eine Direktkühlung des Zwischenraums des Fenstermoduls und damit eines Nutzraums des Gebäudes mit Hilfe eines Wärmetauschers erfolgen. Eine Kühlung des Zwischenraums des Fenstermoduls und damit des Nutzraums des Gebäudes kann alternativ mit Hilfe einer Wärmepumpe erfolgen. Darüber hinaus ist es möglich, den Zwischenraum des Fenstermoduls und damit den Nutzraum des Gebäudes unter Nutzung der Wärmepumpe zu erwärmen (Heizbetrieb).

Das System kann hierbei derart ausgelegt werden, dass lediglich eine einzige umschaltbare Wärmepumpe für den Heiz- und den Kühlbetrieb vorgesehen ist, wodurch sich das System in wirtschaftlicher Weise realisieren lässt.

Der Wärmespeicher kann zwei räumlich getrennte Erdsondenfelder umfassen, wobei die Betriebsarten des Kühlens und des Heizens so gesteuert werden, dass die Raumkühlung möglichst lange ohne die Wärmepumpe und beim Heizen die Wärmepumpe mit möglichst großem COP (Coefficient Of Performance) betrieben werden kann. Der COP ist ein Gütekriterium für Wärmepumpen und wird auch als Leistungszahl bezeichnet.

Die Aufgabe wird schließlich durch ein Kühl- und Heizsystem für Gebäude gelöst, das zumindest ein Fenstermodul der hier beschriebenen Ausprägung umfasst. Dessen Wärmetransportmedium ist einem Wärmespeicher, insbesondere einem Anergiespeicher, zugeordnet, um Wärme von dem Wärmetransportmedium aufzunehmen und zu speichern oder gespeicherte Wärme an das Wärmetransportmedium abzugeben. Ein solches Kühl- und Heizsystem für Gebäude weist vorzugsweise eine Mehrzahl an Fenstermodulen der oben und nachfolgend beschriebenen Art auf. Dabei verbindet z.B. ein Fluidsystem die Fluidleitungen der Fenstermodule thermisch miteinander, um den Austausch von Wärme zu ermöglichen.

Insbesondere kann dabei nur ein hydraulisches System pro waagrecht nebeneinander angeordneten Fenstermodulen, pro Fassadenausrichtung und Stockwerk eines Gebäudes, vorgesehen sein. Hierdurch werden für alle diese Fenstermodule gleichbleibende hydraulische Verhältnisse geschaffen.

Gemäß einer weiteren Ausgestaltung wird auch ein Kühl- und Heizsystem für Gebäude geschaffen, das zumindest ein Fenstermodul der hier beschriebenen Ausprägung umfasst. Bei diesem wird die elektrische Energie für den oder die Lüfter zumindest im sommerlichen Kühlbetrieb mehrheitlich aus erneuerbaren Energiequellen gewonnen. Solche erneuerbaren Energiequellen können beispielsweise fassadenintegrierte Photovoltaikmodule sein. Vorteilhafterweise wird bei hoher Sonneneinstrahlung die für die Lüfter benötigte elektrische Leistung zeitgleich von Photovoltaikmodulen in derselben Fassade erzeugt. Die Gleichzeitigkeit der Sonneneinstrahlung und des Kühlbedarfs macht diese Lösung besonders effektiv. Im winterlichen Heizbetrieb können die Lüfter mit stark reduzierter Leistung betrieben werden. Somit kann im Winter das Heizsystem mit geringem externem Energieaufwand betrieben werden. Dies ermöglicht einen besonders wirtschaftlichen Betrieb von Gebäuden mit dem erfindungsgemäß vorgeschlagenen Kühl- und Heizsystem.

Die Erfindung wird nachfolgend näher anhand von Ausführungsbeispielen in der Zeichnung erläutert. Es zeigen:
- Fig. 1: zeigt eine schematische Darstellung einer ersten Ausgestaltungsvariante eines erfindungsgemäßen Fenstermoduls in einem Querschnitt, wobei das Fenstermodul im Kühlbetrieb betrieben wird;
- Fig. 2: eine schematische Darstellung der ersten Ausgestaltungsvariante des erfindungsgemäßen Fenstermoduls, das im Heizbetrieb betrieben wird;
- Fig. 3: eine schematische Darstellung einer Abwandlung der ersten Ausgestaltungsvariante des erfindungsgemäßen Fenstermoduls im Querschnitt, welches im Kühlbetrieb betrieben wird;
- Fig. 4: eine schematische Darstellung einer zweiten Ausgestaltungsvariante eines erfindungsgemäßen Fenstermoduls im Querschnitt, welche im Kühlbetrieb betrieben wird;
- Fig. 5: eine schematische Darstellung der zweiten Ausgestaltungsvariante des erfindungsgemäßen Fenstermoduls, das im Heizbetrieb betrieben wird;
- Fig. 6: eine schematische Darstellung einer abgewandelten zweiten Ausgestaltungsvariante des erfindungsgemäßen Fenstermoduls, das im Kühlbetrieb betrieben wird;
- Fig. 7: eine schematische Darstellung einer dritten Ausgestaltungsvariante eines erfindungsgemäßen Fenstermoduls im Querschnitt, das im Kühlbetrieb betrieben wird;
- Fig. 8: eine schematische Darstellung der dritten Ausgestaltungsvariante des erfindungsgemäßen Fenstermoduls, das im Heizbetrieb betrieben wird;
- Fig. 9: eine schematische Darstellung einer vierten Ausgestaltungsvariante eines erfindungsgemäßen Fenstermoduls im Querschnitt, das im Kühlbetrieb betrieben wird;
- Fig. 10: eine schematische Darstellung der vierten Ausgestaltungsvariante des erfindungsgemäßen Fenstermoduls, das im Heizbetrieb betrieben wird;
- Fig. 11: eine schematische Darstellung einer fünften Ausgestaltungsvariante eines erfindungsgemäßen Fenstermoduls im Querschnitt, welches im Kühlbetrieb betrieben wird;
- Fig. 12: eine schematische Darstellung eines Ausführungsbeispiels eines erfindungsgemäßen Kühl- und Heizsystem für Gebäudes im Kühlbetrieb;
- Fig. 13: eine schematische Darstellung eines Ausführungsbeispiels eines erfindungsgemäßen Kühl- und Heizsystem für Gebäude im Kühlbetrieb mit Unterstützung einer Wärmepumpe ;
- Fig. 14: eine schematische Darstellung eines Ausführungsbeispiels eines erfindungsgemäßen Kühl- und Heizsystem für Gebäudes im Heizbetrieb.

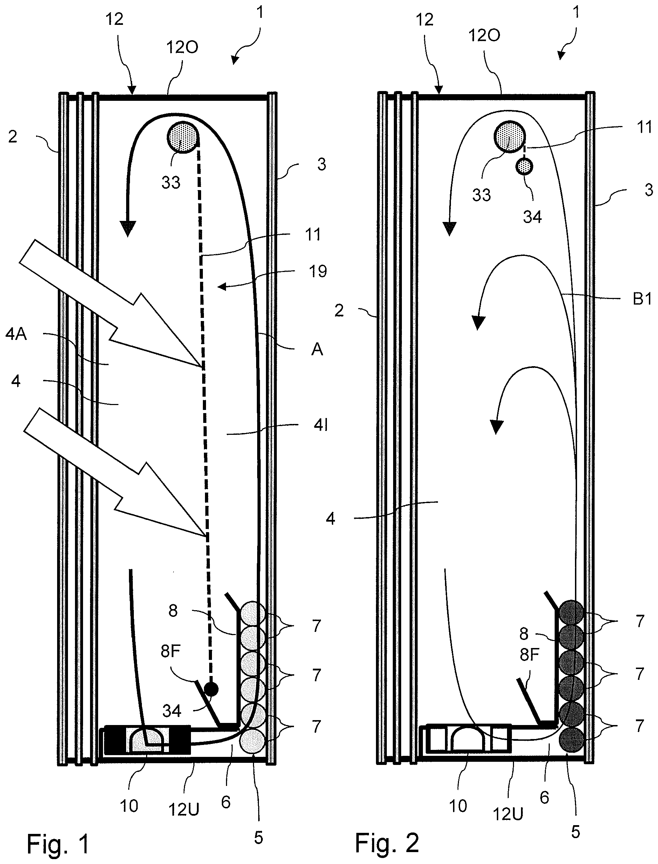

Die Figuren 1 bis 11 zeigen jeweils in einer schematischen Darstellung verschiedene Ausgestaltungsvarianten eines erfindungsgemäßen Fenstermoduls 1 im Querschnitt. Die Fenstermodule 1 sind jeweils dazu ausgelegt, zur thermischen Regulierung eines Gebäudes verwendet zu werden. Unter einer thermischen Regulierung eines Gebäudes wird dabei die Möglichkeit verstanden, einen auf einer Innenseite des Fenstermoduls liegenden Nutzraum durch Heizung oder Kühlung zu konditionieren.

Ein jeweiliges Fenstermodul 1 der Ausgestaltungsvarianten gemäß den Figuren 1 bis 11 umfasst einen Rahmen 12, welcher aus vier Rahmenelementen besteht, von denen in den gezeigten Querschnittsdarstellungen jeweils ein oberes Rahmenelement 12O und ein unteres Rahmenelement 12U ersichtlich sind. Die Buchstaben "O" und "U" kennzeichnen dabei die Position "oben" oder "unten" eines jeweiligen Rahmens in seinem Einbauzustand. Mittels der Rahmenelemente 12O, 12U sowie der in den Figuren nicht dargestellten linken und rechten Rahmenelemente werden eine Außenverglasung 2 und eine von dieser beabstandete Innenverglasung 3 des Fenstermoduls 1 gehalten. Zwischen der Außenverglasung 2 und der Innenverglasung 3 ist ein gegenüber Feststoffen, insbesondere Staub, abgedichteter Zwischenraum 4 gebildet. Der Zwischenraum 4 ist zur Vermeidung von Kondensation gegenüber dem Nutzraum diffusionsoffen. Der Zwischenraum 4 ist mit Luft gefüllt.

Während es sich bei der Außenverglasung 2 um eine hochisolierende Verglasung handelt, kann die Innenverglasung 3 als Einfachverglasung oder als Verbundsicherheitsglas ausgebildet sein. Somit ist der Wärmedurchgangskoeffizient Uₐ der Außenverglasung 2 kleiner als der Wärmedurchgangskoeffizient Uᵢ der Innenverglasung 3. Der Faktor, um den der Wärmedurchgangskoeffizient Uₐ der Außenverglasung 2 kleiner als der Wärmedurchgangskoeffizient Uᵢ der Innenverglasung 3 ist, hängt grundsätzlich von der gewünschten thermischen Regulierung des Gebäudes ab. Zweckmäßig ist es, wenn der Wärmedurchgangskoeffizient Uₐ der Außenverglasung 2 mindestens um den Faktor 3, insbesondere um den Faktor 5 und grösser, kleiner als der Wärmedurchgangskoeffizient Uᵢ der Innenverglasung 3 ist. Falls das Fenstermodul 1 lediglich zur Kühlung des Gebäudes ausgebildet wird, ist ein Faktor von 3 ausreichen, d.h. Uᵢ/Uₐ = 3. Soll das Fenstermodul auch zur Heizung des Nutzraums genutzt werden, so ist ein Faktor von 5 oder größer zweckmäßig, d.h. Uᵢ/Uₐ ≥ 5.

Durch die hochisolierende Außenverglasung 2 wird ein Wärmeaustausch zwischen der Umgebung außerhalb des Gebäudes und dem Inneren des Fenstermoduls 1, aber auch des Nutzraums, d.h. des Gebäudeinneren, wesentlich reduziert. Aufgrund der thermischen Regulierung der Temperatur durch das Fenstermodul 1 ist eine geringer isolierende Innenverglasung 3 vorteilhaft, da wegen der durch das Fenstermodul 1 kontrollierten Temperatur Wärme nach innen abgegeben werden bzw. abgegeben werden soll oder vom Nutzraum an das Fenstermodul abgegeben werden bzw. abgegeben werden soll.

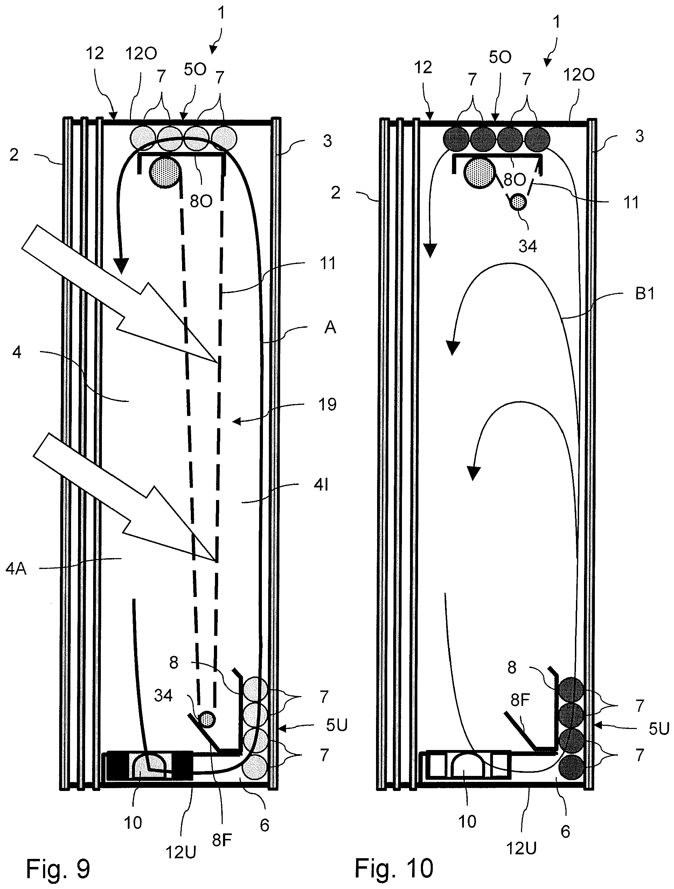

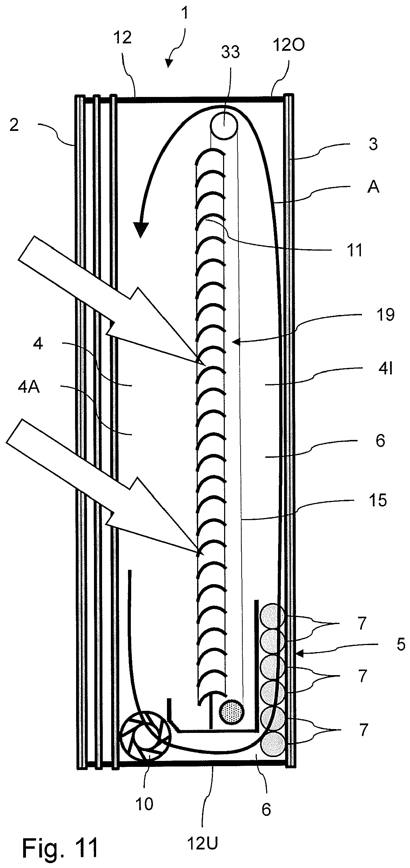

In den jeweiligen Ausgestaltungsvarianten ist in dem Zwischenraum 4 ein Trennelement 19 mit einer verstellbaren Sonnenschutzfunktion angeordnet. Die Sonnenschutzfunktion wird in den Ausgestaltungsvarianten gemäß den Figuren 1 bis 8 durch ein Rollo oder einen textilen Vorhang 11 bereitgestellt. In dem Ausführungsbeispiel gemäß den Figuren 9 und 10 ist ein Doppelrollo als Sonnenschutzvorrichtung 11 vorgesehen. Das in Fig. 11 gezeigte Ausführungsbeispiel nutzt als Sonnenschutzvorrichtung 11 eine Jalousie. In den Ausgestaltungsvarianten der Fig. 1, 2, 3, 9 und 10 stellt die Sonnenschutzfunktion bei ihrer Aktivierung das Trennelement 19 dar. Die Sonnenschutzvorrichtung 11 ist jeweils derart verstellbar, dass das Maß der Überdeckung mit dem Fensterlicht einstellbar ist. Dadurch kann die Tageslichtstärke in dem an die Innenverglasung 3 angrenzenden Nutzraum eingestellt werden. Durch das Maß der Überdeckung der Sonnenschutzvorrichtung 11 mit dem Fenster wird auch festgelegt, wieviel Strahlung durch die Sonnenschutzvorrichtung absorbiert und reflektiert wird.

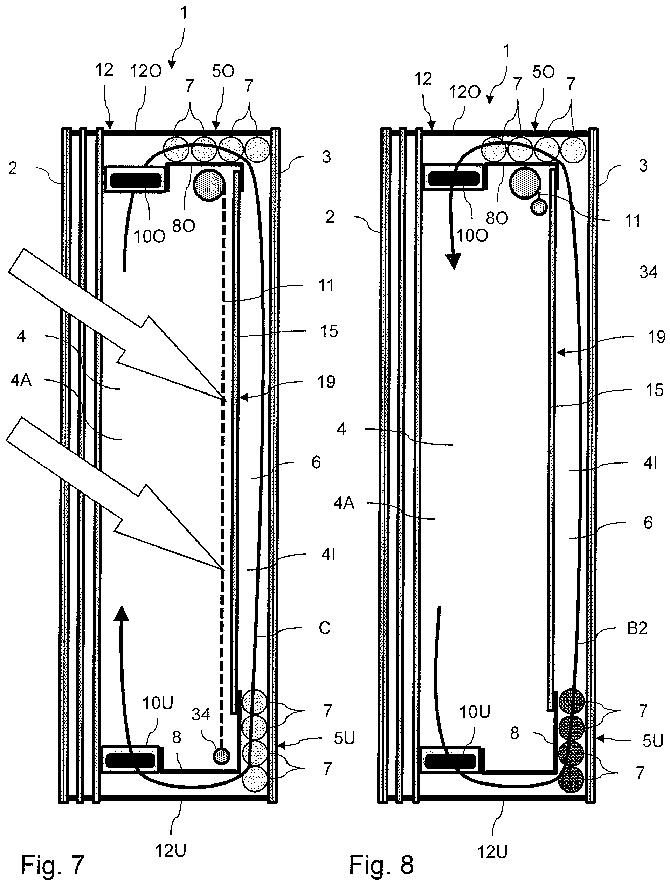

Jedes der Fenstermodule 1 der Ausgestaltungsvarianten gemäß den Figuren 1 bis 11 umfasst zumindest einen nachfolgend näher beschriebenen Luft-Flüssigkeit-Wärmetauscher 5, welcher ein fluiddurchströmtes Kühl-/Heizelement mit einer Fluidleitung, in der ein Wärmetransportmedium geführt ist, umfasst. Als Wärmetransportmedium kann beispielsweise Wasser oder ein Wasser-Glykol-Gemisch genutzt werden. Allen Ausgestaltungsvarianten ist gemeinsam, dass der zumindest eine Luft-Flüssigkeit-Wärmetauscher 5 im Einbauzustand des Fenstermoduls horizontal liegend in dem Zwischenraum 4 des Fenstermoduls angeordnet ist. Wahlweise kann der Luft-Flüssigkeit-Wärmetauscher 5 unten oder oben in dem Zwischenraum angeordnet sein. Ausgestaltungsvarianten sehen auch vor, dass ein erster Luft-Flüssigkeit-Wärmetauscher 5U unten und ein zweiter Luft-Flüssigkeit-Wärmetauscher 5O oben in dem Zwischenraum angeordnet sind (Fig. 7 bis 10).

Der Luft-Flüssigkeit-Wärmetauscher 5, 5U, 5O umfasst insbesondere hydraulisch seriell verschaltete Rippenrohre 7. Der Luft-Flüssigkeit-Wärmetauscher 5 bzw. dessen seriell verschaltete Rippenrohre 7 erstrecken sich in den in den Figuren 1 bis 11 gezeigten Schnittansichten jeweils senkrecht in die Blattebene hinein. Insbesondere erstrecken sie sich über die gesamte Breite des Fenstermoduls 1. Anstelle der Rippenrohre können auch Bienenwabenwärmetauscher, Plattenwärmetauscher, usw. verwendet werden.

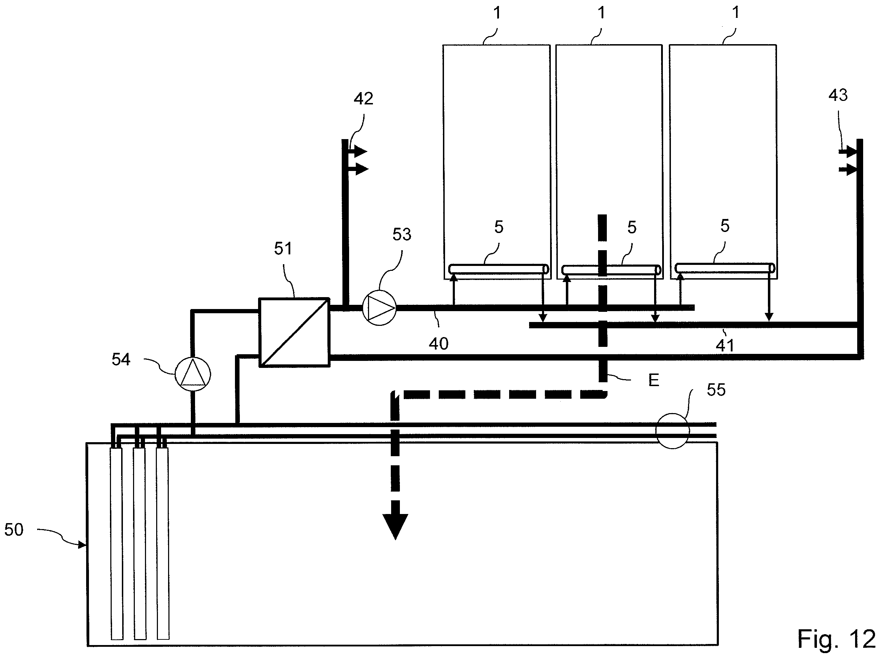

Die Anordnung des oder der Luft-Flüssigkeit-Wärmetauscher 5, 5U, 5O in dem Fenstermodul 1 ist derart, dass er von Luft aus dem Zwischenraum 4 durchströmbar ist. Die in dem Zwischenraum 4, zumindest im Kühlbetrieb zwangsgeführte, Luft gibt Wärme über den Luft-Flüssigkeit-Wärmetauscher an das Wärmetransportmedium ab oder nimmt Wärme von diesem auf, so dass die in dem Zwischenraum 4 in einem Kreislauf geführte Luft gekühlt oder erwärmt wird. Das Wärmetransportmedium in dem oder den Luft-Flüssigkeit-Wärmetauschern wird in einem externen Wärmetauscher, welcher in Verbindung mit den Figuren 12,13 und 14 später beschrieben werden wird, gekühlt oder erwärmt. Dies und die damit verbundenen unterschiedlichen Betriebsarten werden im Detail später beschrieben.

Für eine Zwangsführung der in dem Zwischenraum 4 befindlichen Luft, welche zumindest für den Kühlbetrieb erforderlich ist, ist in dem Zwischenraum 4 zumindest ein Lüfter 10 angeordnet. Zumindest in dem Kühlbetrieb wird durch den zumindest einen Lüfter 10 Luft durch den oder die Luft-Flüssigkeit-Wärmetauscher 5, 5U, 5O geführt, um Wärme zwischen der Luft und dem in dem Luft-Flüssigkeit-Wärmetauscher 5, 5U, 5O geführten Wärmetransportmedium auszutauschen. Darüber hinaus dient der oder die Lüfter dazu, die Luft in dem Zwischenraum 4 in einem Kreislauf zu führen.

Durch das bereits erwähnte Trennelement 19, das die verstellbare Sonnenschutzfunktion umfasst, die bei ihrer Aktivierung im Wesentlichen parallel zu der Außenverglasung 2 und der Innenverglasung 3 verläuft, wird der Zwischenraum in einen inneren Zwischenraum 4I und einen äußeren Zwischenraum 4A unterteilt, um - durch Zwangsführung oder natürliche Konvektion - eine steigende und fallende Luftströmung in dem Zwischenraum 4 zu ermöglichen. Der innere Zwischenraum 4I ist dabei zwischen dem Trennelement 19 bzw. der Sonnenschutzvorrichtung 11 und der Innenverglasung 3 gebildet. Der äußere Zwischenraum 4A ist zwischen dem Trennelement 19 bzw. der Sonnenschutzvorrichtung 11 und der Außenverglasung 2 gebildet.

Das Trennelement 19 bzw. die Sonnenschutzvorrichtung 11 erstreckt sich insbesondere über die gesamte Breite des Fenstermoduls 1, so dass die in dem Zwischenraum 4 geführte Luft oberhalb und unterhalb des Trennelements 19 bzw. der Sonnenschutzvorrichtung 11 zwischen dem inneren Zwischenraum 4I und dem äußeren Zwischenraum 4A zirkulieren muss.

In der nachfolgenden Beschreibung wird auf die jeweiligen Unterschiede der Ausgestaltungsvarianten Bezug genommen.

Die Figuren 1 und 2 zeigen eine erste Ausgestaltungsvariante des erfindungsgemäßen Fenstermoduls, bei der der Lüfter 10 und der Luft-Flüssigkeit-Wärmetauscher 5 in dem Fenstermodul 1 unten in dem Zwischenraum 4 angeordnet sind. Der Lüfter 10, hier in Gestalt eines Radialgebläses, ist am Boden des Fenstermoduls 1 (d.h. am unteren Rahmenelement 12U) des Fenstermoduls 1 angeordnet. Obwohl in den Darstellungen der Figuren 1 und 2 jeweils nur ein Lüfter 10 ersichtlich ist, kann an dem unteren Rahmenelement 12U, senkrecht in die Blattebene hinein, eine Mehrzahl an Lüftern vorgesehen sein. Die Rippenrohre 7 des Luft-Flüssigkeit-Wärmetauschers 5 erstrecken sich übereinander angeordnet von dem unteren Rahmenelement 12U, angrenzend an die Innenverglasung 3, nach oben. Dabei sind die Rippenrohre 7 zwischen der Innenverglasung 3 und einem Wandelement 8 angeordnet, so dass zwischen dem Ausgang des Lüfters 10 und dem am weitest von dem Lüfter entfernten Rippenrohr 7 (das ist das oberste Rippenrohr 7) ein Kanal 6 gebildet ist. Die von dem Lüfter 10 angesaugte Luft wird in dem Kanal 6 und damit durch die Rippenrohre 7 geführt, so dass ein Wärmeaustausch zwischen der Luft und dem Wärmetransportmedium des Luft-Flüssigkeit-Wärmetauschers 5 erfolgen kann.

Im Kühlbetrieb, der in Fig. 1 dargestellt ist, wird der Lüfter mit elektrischer Energie betrieben, um Luft zwangsweise in dem Zwischenraum 4 zu führen. Dazu ist es zwingend, dass das Trennelement 19, das gemäß dieser Ausgestaltungsvariante durch die aktivierte (d.h. heruntergefahrene) Sonnenschutzvorrichtung 11 gebildet ist, den Zwischenraum 4 in den inneren und den äußeren Zwischenraum 4I, 4A trennt. Dadurch ergibt sich die mit dem Bezugszeichen A gekennzeichnete Luftströmung. Der aktivierte Lüfterbetrieb ist gegenüber dem in Fig. 2 nicht aktivierten oder einer um den Faktor 5 bis 20 reduzierten Leistung des Lüfters durch einen farblich dunkler dargestellten Lüfter 10 illustriert.

Bei aktivierter Sonnenschutzfunktion, d.h. heruntergelassenen Sonnenschutzvorrichtung 11, trifft Sonnenstrahlung auf die Sonnenschutzvorrichtung 11 und erwärmt Luft in dem äußeren Zwischenraum 4A. Die erwärmte Luft wird durch den Lüfter 10 entgegen einer natürlichen Konvektion angesaugt, durch den Luft-Flüssigkeit-Wärmetauscher 5, der ein vergleichsweise kälteres Wärmetransportmedium umfasst, abgekühlt und mit reduzierter Temperatur entlang der Innenverglasung an dieser nach oben geführt. Im Bereich zwischen dem oberen Rahmenelement 12O und einer Wickelwelle 33 der Sonnenschutzvorrichtung 11 wird der kalte Luftstrom von dem inneren Zwischenraum 4I wieder zurück in den äußeren Zwischenraum 4A geführt, wo er sich aufgrund der Sonneneinstrahlung erwärmt bzw. mit der wärmeren Luft vermischt. Durch den Betrieb des Lüfters 10 wird der erwärmte Luftstrom im äußeren Zwischenraum 4A wieder nach unten gesaugt, tritt dort in den Lüfter 10 ein und wird durch den Kanal 6 wiederum in den Luft-Flüssigkeit-Wärmetauscher 5 geführt, usw..

Um im unteren Bereich des Fenstermoduls eine vollständige Trennung zwischen dem inneren Zwischenraum 4I und dem äußeren Zwischenraum 4A zu erzielen, umfasst die Sonnenschutzvorrichtung 11 an ihrem unteren Ende eine Beschwerungsstange 34. Diese liegt an einer Führungsfläche 8F des Wandelements 8 an. Es versteht sich, dass das Wandelement 8 und die Führungsfläche 8F nicht einstückig ausgebildet zu sein brauchen, aber können. Die Führungsfläche 8F ist als schräge Fläche ausgebildet, so dass die Beschwerungsstange entlang der Führungsfläche 8F beim Herablassen nach unten gleiten kann, den Luftbypass unterbindet und eine definierte Endposition für die Sonnenschutzvorrichtung 11 überflüssig macht.

Fig. 2 zeigt den Heizbetrieb der ersten Ausgestaltungsvariante. Im Heizbetrieb ist es nicht zwingend erforderlich (aber möglich), die Trennung zwischen äußerem Zwischenraum 4A und innerem Zwischenraum 4I vorzunehmen. Aus diesem Grund kann die Sonnenschutzvorrichtung 11 deaktiviert werden. Dies bedeutet, dass der textile Vorhang oder das Rollo auf die Wickelwelle 33 aufgewickelt wurden. Ebenso ist es nicht erforderlich (aber möglich), dass der Lüfter 10 betrieben wird.

Beim Heizbetrieb weist das Wärmetransportmedium des Luft-Flüssigkeit-Wärmetauschers 5 eine größere Temperatur als die Luft in dem Zwischenraum 4 auf. Aufgrund natürlicher Konvektion sinkt kalte Luft auf den Boden des Fenstermoduls 1 ab und dringt über den Lüfter 10 in den Kanal 6 ein. Die in den Kanal 6 eindringende Luft gelangt zum untersten Rippenrohr 7 des Luft-Flüssigkeit-Wärmetauschers 5 und steigt, da sich die Luft am Wärmetauscher erwärmt, entlang der Innenverglasung 3 allmählich nach oben. Durch den an der Innenverglasung 3 aufsteigenden erwärmten Luftstrom kann Wärme durch die Innenverglasung 3 in den Nutzraum abgegeben werden. Aufgrund des beim Heizbetrieb hier nicht vorhandenen Trennelements 19 kühlt sich die entlang der Innenverglasung 3 aufsteigende Luft ab und fällt im Bereich der Außenverglasung 2 wiederum nach unten. Die abgekühlte Luft tritt über den Lüfter 10 wiederum in den Kanal 6 ein und wird durch das Wärmetransportmedium des Luft-Flüssigkeit-Wärmetauschers 5 wiederum erwärmt, usw.. Der erwärmte Luftstrom ist mit B1 gekennzeichnet.

Es ist anzumerken, dass trotz des nicht vorhandenen Trennelements ein Heizen des Nutzraums möglich ist. Eine verbesserte Heizleistung lässt sich dann erzielen, wenn, wie in Fig. 1 gezeigt, das Trennelement vorgesehen ist. Es ist nicht erforderlich, dass der Lüfter in Betrieb genommen wird, da das Heizen in diesem Ausführungsbeispiel im konvektiven, natürlichen Gleichstrom erfolgt. Die Heizleistung kann jedoch durch Betrieb des Lüfters 10 mit geringer Leistung stark verbessert werden.

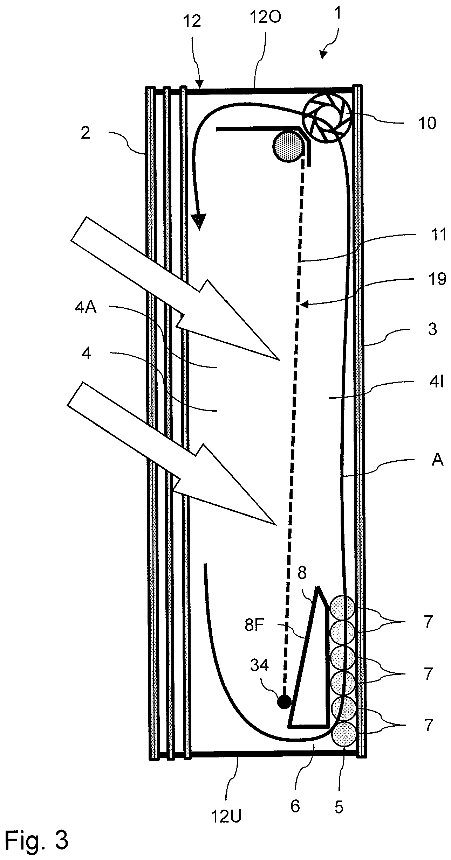

Fig. 3 zeigt eine Abwandlung des in Fig. 1 beschriebenen Kühlbetriebs. Bei dieser Ausgestaltungsvariante ist im Bereich des oberen Rahmenelements 12O und angrenzend an die Innenverglasung 3 ein als Querstromgebläse ausgebildeter Lüfter 10 vorgesehen. Der Luft-Flüssigkeit-Wärmetauscher 5 liegt wie bei den Varianten der Figuren 1 und 2 am unteren Rahmenelement 12U vor der Innenverglasung 3. Auch hier ergibt sich ein Kühlbetrieb mit forciertem Gegenstrom, wobei, wie beschrieben, das Trennelement in Gestalt der Sonnenschutzvorrichtung 11 hierzu aktiviert sein muss. Der sich ergebende Luftstrom ist mit A gekennzeichnet.

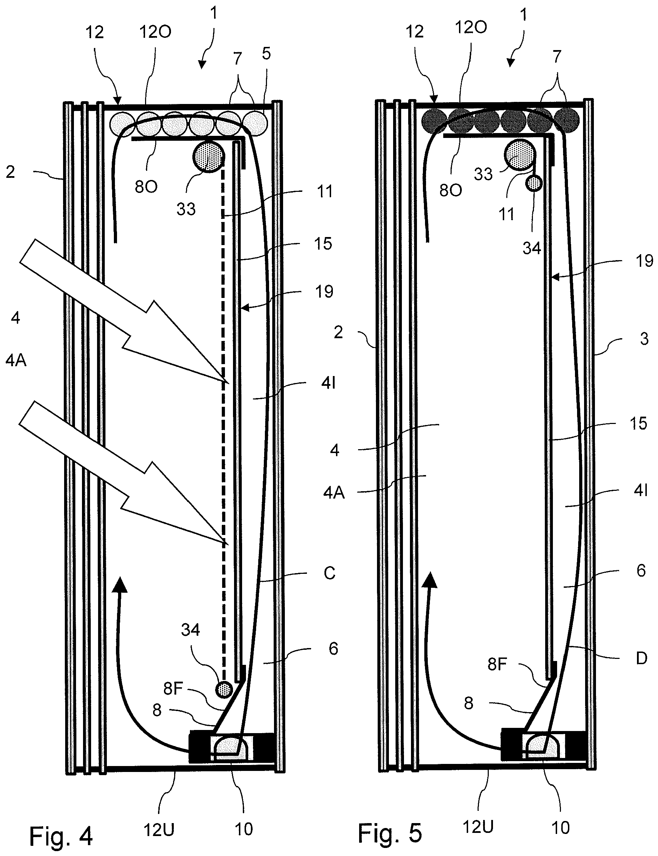

Die Figuren 4 und 5 zeigen eine zweite Ausgestaltungsvariante, bei der das Trennelement 19 durch eine feststehende, transparente Trennwand 15 und die aktivier- oder deaktivierbare Sonnenschutzvorrichtung 11 gebildet ist. Fig. 4 zeigt den Kühlbetrieb, bei der, wie beschrieben, die Sonnenschutzvorrichtung 11 in Gestalt eines Rollos oder textilen Vorhangs aktiviert ist, so dass die Befestigungsstange 34 an der Führungsfläche 8F des Wandelements 8 anliegt. Die transparente Trennwand 15, beispielsweise aus Glas oder einem transparenten Kunststoff, die sich über die gesamte Breite (in der Zeichnung senkrecht in die Zeichenebene hinein) des Fenstermoduls 1 erstreckt, ist zwischen der Sonnenschutzvorrichtung 11 und der Innenverglasung 3 angeordnet. Dabei erstreckt sich das Trennelement von dem Wandelement 8 über dem unteren Rahmenelement 12U bis zu einem oberen Wandelement 8O unter dem oberen Wandelement 12O. Ein Schenkel des oberen Wandelements 8O verläuft hierbei parallel zu dem oberen Rahmenelement 12O, so dass in dem zwischen den beiden Komponenten gebildeten Innenraum die Rippenrohre 7 des Luft-Flüssigkeit-Wärmetauschers 5 angeordnet sind. Hierdurch ergibt sich ein vollständig abgeschlossener Kanal 6 zwischen dem am unteren Ende angeordneten Wandelement 8 und dem oberen Wandelement 8O sowie der Innenverglasung 3. Der Lüfter 10 ist am unteren Rahmenelement 12U angeordnet. Beispielhaft ist der Lüfter als Radialgebläse ausgebildet. Wie im vorangegangenen Ausführungsbeispiel können in die Zeichenebene hinein mehrere Lüfter 10 angeordnet sein.

Im Kühlbetrieb erfolgt ein Kühlen im forcierten Gleichstrom, d.h. in Richtung der natürlichen Konvektion (Luftstrom C). Dabei ist der Lüfter 10 in Betrieb und saugt Luft aus dem äußeren Zwischenraum 4A im oberen Bereich des Fensterelements 1 bzw. Zwischenraums 4 an, so dass die Luft zunächst durch den Luft-Wärmetauscher 5 strömt. Die durch das Wärmetransportmedium des Luft-Flüssigkeit-Wärmetauschers 5 gekühlte Luft wird dann in dem Kanal 6, d.h. dem inneren Zwischenraum 4I, entlang der Innenverglasung 3 nach unten gesaugt, bis diese durch den Lüfter 10 wiederum zurück in den äußeren Zwischenraum 4A geführt wird. Dort erwärmt sich die Luft aufgrund der auf die Sonnenschutzvorrichtung 11 treffenden Wärmestrahlung wieder, steigt auf, und wird wiederum zwangsgeführt durch den Luft-Flüssigkeit-Wärmetauscher 5 gekühlt und in den Kanal 6 gesaugt. Hierdurch kann eine Abkühlung des Nutzraums, der an die Innenverglasung 3 angrenzt, erfolgen.

Der Heizbetrieb erfolgt im Zwischenraum 4I im forcierten Gegenstrom, d.h. entgegen der natürlichen Konvektionsrichtung (Luftstrom D). In dem hier in Fig. 5 gezeigten Ausführungsbeispiel ist es dazu erforderlich, auch beim Heizen den Lüfter 10 zu betreiben. Die Sonnenschutzvorrichtung 11 kann demgegenüber deaktiviert sein, d.h. der textile Vorhang oder das Rollo ist auf der Wickelwelle 33 aufgewickelt. Es versteht sich, dass die Luft, die von dem äußeren Zwischenraum 4A durch den Luft-Flüssigkeit-Wärmetauscher 5 aufgrund des Betriebs des Lüfters 10 durchgesaugt wird, durch ein entsprechend temperiertes Wärmetransportmedium im Heizbetrieb erwärmt wird. Durch die dann im Vergleich zum äußeren Zwischenraum 4A im inneren Zwischenraum 4I wärmere Luft kann eine Wärmeabgabe an den Nutzraum erfolgen.

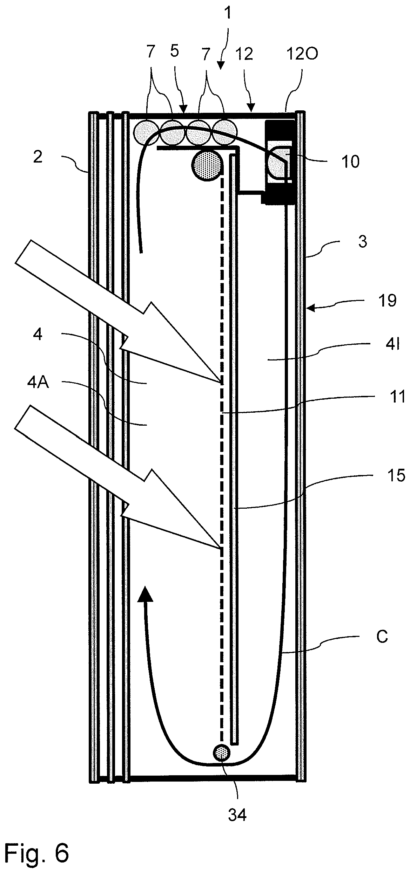

Fig. 6 zeigt eine Abwandlung der zweiten Ausgestaltungsvariante, bei der ein Kühlen im forcierten Gleichstrom (Luftstrom C) erfolgt. Bei dieser Ausgestaltungsvariante sind sowohl der Luft-Flüssigkeit-Wärmetauscher 5 als auch der Lüfter 10 im oberen Bereich des Fenstermoduls 1, d.h. des oberen Rahmenelements 12, angeordnet. Wie beschrieben, ist im Kühlbetrieb die Sonnenschutzvorrichtung 11 aktiviert, so dass sich das Rollo bzw. der textile Vorhang vor der transparenten Trennwand 15 ausbreitet. Auch hier ergibt sich durch den Betrieb des Lüfters 10 eine Zwangsführung der in dem Zwischenraum 4 befindlichen Luft, wobei der kühle Luftstrom entlang der Innenverglasung 3 nach unten geführt wird, während der warme Luftstrom im äußeren Zwischenraum 4A vom unteren Bereich des Fenstermoduls 1 zum oberen Bereich des Fenstermodul 1 geführt wird.

Die Figuren 7 und 8 zeigen eine dritte Ausgestaltungsvariante des erfindungsgemäßen Fenstermoduls 1. Dabei zeigt Fig. 7 wiederum den Kühlbetrieb, während Fig. 8 den Heizbetrieb illustriert. Bei dieser dritten Ausgestaltungsvariante befindet sich nahe dem oberen Rahmenelement 12O und dem unteren Rahmenelement 12U jeweils ein reversierbares Axialgebläse als Lüfter 10O und 10U. Darüber hinaus sind sowohl angrenzend an das obere Rahmenelement 12O als auch angrenzend an das untere Rahmenelement 12U jeweils ein Wärmetauscher 5O und 5U angeordnet. Wie bei der zweiten Ausgestaltungsvariante umfasst das Trennelement 19 die feststehende, transparente Trennwand 15 und die zwischen der Außenverglasung 2 und der Trennwand 15 verfahrbare Sonnenschutzvorrichtung 11.

Im Kühlbetrieb werden die Lüfter 10O und 10U derart betrieben, dass die im äußeren Zwischenraum 4A erwärmte Luft von unten nach oben angesaugt und im Bereich des oberen Rahmenelements 12O in den zwischen der Trennwand 15 und der Innenverglasung 3 gebildeten Kanal einströmt. Dabei wird die erwärmte Luft durch den oberen Wärmetauscher 5O abgekühlt. Das Wärmetransportmedium des unteren Luft-Flüssigkeit-Wärmetauschers 5U braucht demgegenüber keine Kühlung vornehmen. Der mit C gekennzeichnete Luftstrom beim Kühlen ist ein forcierter Gleichstrom, d.h. verläuft in Richtung der natürlichen Konvektion.

Im Heizbetrieb wird die Drehrichtung der Lüfter 12O und 12U umgedreht, so dass ein Ansaugen der Luft aus dem äußeren Zwischenraum 4A im Bereich des unteren Rahmenelements 12U erfolgt. Durch ein entsprechend temperiertes Wärmetransportmedium in dem unteren Wärmetauscher 5U wird die Luft erwärmt und entlang der Innenverglasung 3 in dem Kanal 6 nach oben geführt. Der obere Luft-Flüssigkeit-Wärmetauscher 5O kann inaktiv bleiben. Das Heizen erfolgt im forcierten Gleichstrom (Luftstrom B2).

Bei dieser dritten Ausgestaltungsvariante erfolgt sowohl das Kühlen im Zwischenraum 4A als auch das Heizen im Zwischenraum 4I im forcierten Gleichstrom. Wie in den vorangegangenen Ausführungsbeispielen, ist im Kühlbetrieb die Sonnenschutzvorrichtung 11 aktiv (vgl. Fig. 7), während sie im Heizbetrieb inaktiv ist oder sein kann.

In der vierten Ausgestaltungsvariante, die in den Figuren 9 und 10 gezeigt ist, ist das Trennelement 19 als steuerbares Doppelrollo ausgebildet. Dieses bildet gleichzeitig die Sonnenschutzvorrichtung 11. Fig. 9 zeigt dabei das herabgelassene Doppelrollo, womit die Sonnenschutzvorrichtung 11 aktiviert ist. Durch die hier ebenfalls vorhandene Beschwerungsstange 34 wird sichergestellt, dass das Doppelrollo an dem Wandelement 8 bzw. deren Führungsfläche 8F anliegt, so dass sich eine Trennung zwischen dem inneren Zwischenraum 4I und dem äußeren Zwischenraum 4A ergibt. Lediglich beispielhaft ist in dieser Ausgestaltungsvariante der Lüfter 10 im Bereich des unteren Rahmenelements 12U angeordnet. Der Wärmetauscher umfasst einen Luft-Flüssigkeit-Wärmetauscher 5O im Bereich des oberen Rahmenelements 12O und einen unteren Luft-Flüssigkeit-Wärmetauscher 5U im Bereich des unteren Rahmenelements 12U. Als Doppelrollo wird ein annähernd luftdichter Textilvorhang bezeichnet, welcher horizontale, abwechselnd stark und schwach absorbierende Bahnen aufweist und mit der Beschwerungsstange 34 umgelenkt wird. Die horizontalen Bahnen sind vorteilhafterweise 50 bis 200 mm hoch und ermöglichen durch die Überlappung der sonnenseitigen gegenüber der nutzraumseitigen Bahn die Steuerung der Tageslichtstärke. Damit kann das Aktivieren der Sonnenschutzvorrichtung und die Steuerung der Tageslichtstärke mit einem einzigen Motor gesteuert werden.

Im Kühlbetrieb wird Luft durch den Lüfter 10 im Bereich des unteren Rahmenelements 12U eingesaugt, in den Kanal 6 mit dem unteren Luft-Flüssigkeit-Wärmetauscher 5U eingeleitet und dann in dem inneren Zwischenraum 4I entlang der Innenverglasung 3 nach oben geleitet. Dort kann die Luft weiter durch den oberen Luft-Flüssigkeit-Wärmetauscher 50 geführt und abgekühlt werden und dann in den äußeren Zwischenraum 4A zurückgeleitet werden, in dem sich die durch die auf die Sonnenschutzvorrichtung 11 auftreffende Luft wieder erwärmt. Der obere Luft-Flüssigkeit-Wärmetauscher 5O kann im Kühlbetrieb auch deaktiviert sein. Das Kühlen erfolgt im Zwischenraum 4A im forcierten Gegenstrom (Luftstrom A), d.h. entgegen der natürlichen Konvektion.

In dem in Fig. 10 gezeigten Heizbetrieb ist die Sonnenschutzvorrichtung 11 deaktiviert. Ebenso ist der Lüfter 10 inaktiv. Luft wird durch den oberen und den unteren Luft-Flüssigkeit-Wärmetauscher 5U und 5O erwärmt, wodurch sich die mit dem Bezugszeichen A bzw. B gekennzeichnete Luftströmung in dem Zwischenraum 4 ergibt. Dabei steigt die durch den unteren Luft-Flüssigkeit-Wärmetauscher 5U erwärmte Luft an der Innenseite der Innenverglasung 3 nach oben, kühlt dabei ab und sinkt aufgrund der geringeren Temperatur entlang der Außenverglasung 2 wiederum nach unten. Anschließend wiederholt sich der Kreislauf. Hierbei ergibt sich ein Heizen im Gleichstrom (Luftstrom B1).

Fig. 11 zeigt eine fünfte Ausgestaltungsvariante, bei der das Trennelement 19 durch eine verstell- und steuerbare Jalousie als Sonnenschutzvorrichtung in Verbindung mit einer transparenten Folie als Trennwand 15 ausgebildet ist. Bei diesem Ausführungsbeispiel ist der als Querstromgebläse ausgebildete Lüfter 10, angrenzend an die Außenverglasung 2, im Bereich des unteren Rahmenelements 12U angeordnet. Ebenso ist ein einziger Luft-Flüssigkeit-Wärmetauscher 5 im Bereich des unteren Rahmenelements 12U angeordnet, wobei sich die übereinander angeordneten Rippenrohre 7 wiederum entlang der Innenverglasung 3 nach oben "stapeln". Durch die als Folie ausgebildete Trennwand 15 ergibt sich die erwünschte Trennung zwischen äußerem Zwischenraum 4A und innerem Zwischenraum 4I. Durch die Jalousie 11 kann das Maß der Überdeckung mit dem Tageslicht im Nutzraum auf einfache Weise eingestellt werden. Die auf die Jalousie auftreffende Sonnenstrahlung wird von der Jalousie 11 absorbiert und reflektiert, wodurch sich die Luft im äußeren Zwischenraum 4A erwärmt. Durch den Betrieb des Lüfters 10 wird die erwärmte Luft am Boden des Fenstermoduls 1 in den Kanal 6 eingesaugt, durch das in dem Luft-Flüssigkeit-Wärmetauscher 5 zirkulierende Wärmetransportmedium abgekühlt, so dass die abgekühlte Luft entlang der Innenverglasung 3 in dem Kanal 6 nach oben geführt wird (Luftstrom A). Zwischen der Wickelwelle 33 und dem oberen Rahmenelement 12O wird die allmählich wieder wärmer werdende Luft wieder zurück in den äußeren Zwischenraum 4A geführt. Die Steuerung der Tageslichtstärke erfolgt durch Kippen der Jalousieelemente und kann beispielsweise durch eine Vorrichtung im Bereich der unteren Jalousieauflage erfolgen.

Fig. 12 zeigt eine schematische Darstellung eines erfindungsgemäßen Kühl- und Heizsystem für Gebäude gemäß einer ersten Betriebsvariante. Das in Fig. 12 gezeigte Kühl- und Heizsystem für Gebäude dient zum Kühlen eines Gebäudes im Sommer mit Hilfe der oben beschriebenen Fenstermodule 1. In dieser Betriebsvariante sind beispielhaft drei nebeneinander angeordnete Fenstermodule 1 schematisch dargestellt. Lediglich beispielhaft basieren die Fenstermodule auf dem in Verbindung mit den Figuren 1,2,3 und 11 beschriebenen Prinzip der Fenstermodule, bei denen der Luft-Flüssigkeit-Wärmetauscher 5 im Bereich des unteren Rahmenelements 12U der Fenstermodule 1 angeordnet ist. Stellvertretend sind lediglich die jeweiligen Fluidleitungen der Luft-Flüssigkeit-Wärmetauscher 5 dargestellt.

Die Fensterelemente 1 sind nebeneinander angeordnete Fensterelemente, z.B. eines Stockwerks einer Fassade. Die Luft-Flüssigkeit-Wärmetauscher sind an eine gemeinsame Zuleitung 40 und eine gemeinsame Rückleitung 41 angeschlossen. Die Zuleitung 40 sowie die Rückleitung 41 können mit einer grundsätzlich beliebigen Anzahl an Zuleitungsabzweigen 42 und Rückleitungsabzweigen 43 versehen sein, um weitere Fenstermodule, z.B. anderer Stockwerke der Fassade, mit dem Wärmetransportmedium zu versorgen.

Das Wärmetransportmedium wird durch eine Pumpe 53 in die Zuleitung 40 und von dort in die Luft-Flüssigkeit-Wärmetauscher 5 eines jeden Fenstermoduls 1 gefördert. Die Zulauftemperatur zum Kühlen im Sommer beträgt beispielsweise 16 °C. Nach dem Durchlaufen des jeweiligen Luft-Flüssigkeit-Wärmetauschers wird das Wärmetransportmedium über die Rückleitungen und die Sammel-Rückleitung 41 mit erwärmter Temperatur, z.B. 18 °C, weiter gefördert. Der beschriebene sekundäre Kreislauf ist an einen Wärmetauscher 51 angeschlossen, welcher primärseitig mit einem Wärmespeicher 50, z.B. einem unter der Erde gelegenen Anergiespeicher, in Gestalt eines oder mehrerer Erdsondenfelder verbunden ist. Im Primärkreislauf ist eine weitere Pumpe 54 vorgesehen, welche ein Fluid aus dem Wärmespeicher 50, z.B. mit 14 °C Vorlauftemperatur, fördert und das im Wärmetauscher 51 auf z.B. 16 °C erwärmt wird. Diese Wärme wird in den Wärmespeicher 50 eingebracht, um diesen beständig zu erwärmen. Der hierbei auftretende Wärmefluss des Kühlens ist mit dem Bezugszeichen E gekennzeichnet.

Dadurch kann der solare Wärmeüberschuss im Anergiespeicher 50 gespeichert werden und eine jährliche Winter-Degradation kompensieren. Als Wärmeträger kann im Primärkreislauf sowie im Sekundärkreislauf, an den die Fenstermodule 1 angeschlossen sind, Wasser oder ein Wasser-Glykol-Gemisch verwendet werden. Die typische Temperatur des Wärmespeichers 50 in Gestalt eines Erdsondenfelds beträgt im Vorlauf zwischen 8 °C und 18 °C.

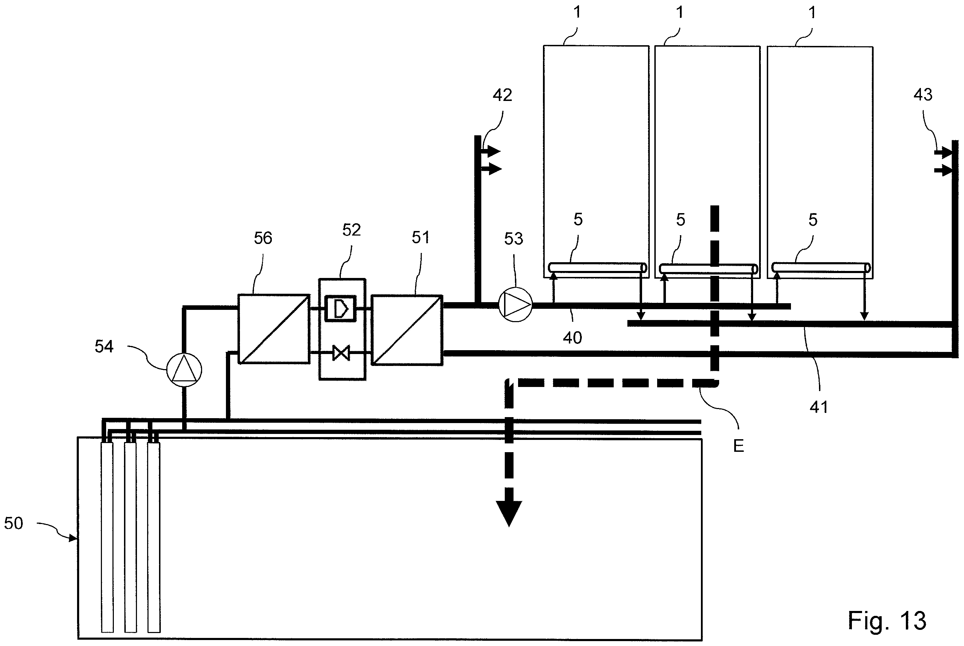

Fig. 13 zeigt eine zweite Betriebsvariante eines erfindungsgemäßen Kühl- und Heizsystem für Gebäude. Dieses ist gegenüber der in Fig. 12 gezeigten Variante dadurch verändert, dass neben dem Wärmetauscher 51 auch eine Wärmepumpe 52 vorgesehen ist. Die Wärmepumpe 52 ist zwischen dem bereits beschriebenen Wärmetauscher 51 und einem weiteren Wärmetauscher 56, der mit dem Wärmespeicher 50 gekoppelt ist, angeordnet. Durch das zusätzliche Vorsehen der Wärmepumpe 52 ist es möglich, trotz höherer Vorlauftemperaturen im Primärkreislauf (z.B. 18 °C) die Zulauftemperatur an den Fenstermodulen 1 geringer zu halten (z.B. 15 °C). Auch hier speichert der Wärmespeicher 50 den solaren Wärmeüberschuss, der durch die Fenstermodule 1 "erzeugt" wird, auch wenn der Vorlauf des Wärmespeichers für eine passive Kühlung des Gebäudes bereits zu hoch ist. Der Wärmefluss ist durch den Pfeil E gekennzeichnet.

Beide Varianten ermöglichen es, in dem Zwischenraum der Fenstermodule eine geringere Temperatur zu erzeugen, als diese im Gebäudeinneren herrscht. Im Ergebnis lässt sich das Gebäudeinnere abkühlen.

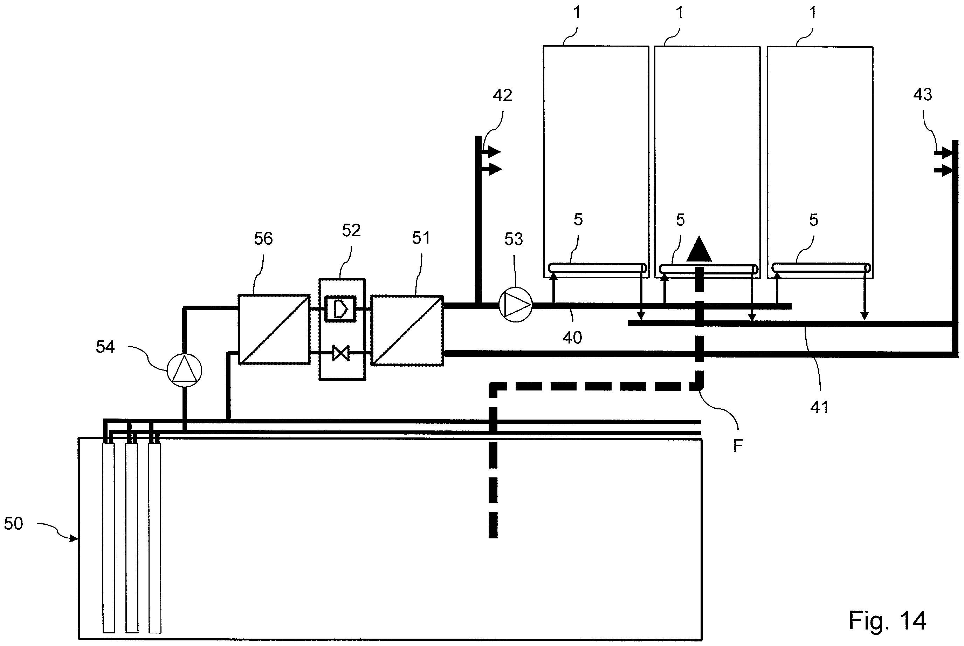

Fig. 14 zeigt eine dritte Betriebsvariante des erfindungsgemäßen Kühl- und Heizsystems für Gebäude, welches lediglich beispielhaft die technischen Komponenten von Fig. 13 nutzt. Dabei wird durch den Wärmespeicher 50 in Gestalt des Erdsondenfeldes Wärme geliefert (z.B. 14°C im primären Kreislauf), wodurch sich dieses im Winter langsam abkühlt. Durch die Wärmepumpe 52 wird im Zulauf des Sekundärkreislaufes eine wesentlich höhere Temperatur als im Primärkreislauf erreicht, z.B. 26 °C. Das Wärmetransportmedium wird in der beschriebenen Weise in die Luft-Flüssigkeit-Wärmetauscher der Fenstermodule gefördert, wodurch die Wärme im Luft-Flüssigkeit-Wärmetauscher an die Luft im Zwischenraum 4 der jeweiligen Fenstermodule 1 abgegeben wird. Hierdurch lässt sich in dem Zwischenraum 4 der Fenstermodule 1 eine höhere Temperatur als im Gebäudeinneren (Nutzraum) erzeugen, wodurch der Nutzraum durch Wärmeeintrag über die "schlecht" isolierende Innenverglasung im Ergebnis erwärmt wird. Die Rücklauftemperatur im Sekundärkreislauf beträgt dann beispielsweise 25 °C, nachdem das Wärmetransportmedium den Luft-Flüssigkeit-Wärmetauscher durchlaufen hat. Der Wärmefluss ist durch den Pfeil F gekennzeichnet.

Durch das vorgeschlagene Vorgehen lassen sich wesentliche Exergie-Einsparungen mit Glasfassaden erzielen. Die Konstruktion der Fenstermodule stellt sicher, dass im Inneren, d.h. dem Zwischenraum 4, aufgrund der aktiven Kühlung auch im Sommer keine Überhitzung auftreten kann.

Es erfolgt eine aktive Kühlung des Gebäudeinneren mit einem kühleren, flüssigen Speichermedium aus einem Anergiespeicher, wie z.B. einem Erdsondenfeld, Grundwasser, Seewasser, einem Eis- oder Salzspeicher. Durch den Kühlbetrieb im Sommer kann eine Regenerierung des Anergiespeichers, wie z.B. eines Erdsondenfelds, erzielt werden. Dabei kann insbesondere im Sommer zum Betrieb der Lüfter Photovoltaik genutzt werden, welche beispielsweise in die Fassade des Gebäudes integriert ist. Bei der Bewirtschaftung des oder der Erdsondenfelder (oder anderer Anergiespeicher) oder allfällig vorhandenen Kühlmaschinen (z.B. Kühlen durch Verdunsten) ist darauf zu achten, dass der Anergiespeicher über mehrere Jahre weder degradiert (sich abkühlt) noch sich unbeabsichtigt erwärmt.

Im Winter lässt sich eine integrierte Raumheizung mittels Anergie, Wärmepumpe und den beschriebenen Fenstermodulen erzielen. Im Ergebnis können auf zusätzliche Kühldecken, Bodenheizungen sowie überdimensionierte Klimaanlagen verzichtet werden.

Eine dynamische Anpassung an eine Außentemperatur sowie die Sonneneinstrahlung ist durch eine Steuerung bzw. Regelung der Sonnenschutzvorrichtung und/oder des Luftstroms in den Kanälen und/oder der Temperatur und im geringen Masse durch den Durchfluss des Wärmetransportmediums möglich.

Eine Vermeidung von Kondensationen im Zwischenraum der Fenstermodule ohne den Einsatz trockener Luft ist gewährleistet.

Darüber hinaus lassen sich die Fenstermodule mit kleineren oder zumindest maximal gleich hohen Kosten bereitstellen, wie bekannte Fassadensysteme.

Der Heizbetrieb ist gegenüber konventionellen Heizungen, wie beispielsweise Bodenheizung, infolge deutlich geringerer Vorlauftemperaturen für die gleiche Heizleistung und infolge höherer Temperaturen des Anergiespeichers effizienter, da der COP der Wärmepumpe infolge des geringeren Temperaturhubes (Differenz der Vorlauf und Speichertemperatur) steigt.

Auch der Kühlbetrieb ist infolge des um Faktoren höheren Wärmeübergangskoeffizienten des Wärmetauschers im Fenstermodul im Vergleich zu Kühldecken oder Klimaanlagen in Bezug auf Exergieverbrauch deutlich effizienter.

### Bezugszeichenliste

- 1: Fenstermodul
- 2: Außenverglasung
- 3: Innenverglasung
- 4: Zwischenraum
- 4I: innerer Zwischenraum
- 4A: äußerer Zwischenraum
- 5: Luft-Flüssigkeit-Wärmetauscher
- 5U: unterer Luft-Flüssigkeit-Wärmetauscher
- 5O: oberer Luft-Flüssigkeit-Wärmetauscher
- 6: Kanal
- 7: Rippenrohr
- 8: Wandelement
- 8F: Führungsfläche
- 8O: oberes Wandelement
- 10: Lüfter
- 11: Sonnenschutzvorrichtung
- 12: Rahmen
- 12O: oberes Rahmenelement
- 12U: unteres Rahmenelement
- 15: Trennwand
- 19: Trennelement
- 33: Wickelwelle
- 34: Beschwerungsstange
- 40: Zuleitung
- 41: Rückleitung
- 42: Zuleitungsabzweig zu weiterem Fenstermodulsystem
- 43: Rückleitungsabzweig von weiterem Fenstermodulsystem
- 50: Wärmespeicher
- 51: Wärmetauscher
- 52: Wärmepumpe
- 53: Pumpe
- 54: Pumpe
- (55: Sammelleitungen)
- 56: Wärmetauscher
- A: forcierter Luftstrom im Zwischenraum 4A entgegen der natürlichen Konvektion, im Zwischenraum 4I im Gleichstrom
- B1: Luftstrom in Richtung der natürlichen Konvektion
- B2: Forcierter Luftstrom in Richtung der natürlichen Konvektion
- C: forcierter Luftstrom im Zwischenraum 4A im Gleichstrom, im Zwischenraum 4I entgegen der natürlichen Konvektion
- D: forcierter Luftstrom im Zwischenraum 4I entgegen der natürlichen Konvektion
- E: Wärmefluss Kühlen
- F: Wärmefluss Heizen

## Patentansprüche

1. Fenstermodul (1) zur thermischen Regulierung, umfassend ein Beheizen oder Kühlen, eines Gebäudes, umfassend:
- eine Außenverglasung (2) und eine Innenverglasung (3), wobei zwischen der Außenverglasung (2) und der Innenverglasung (3) ein gegenüber Feststoffen, insbesondere Staub, abgedichteter Zwischenraum (4) gebildet ist;
- zumindest einen Luft-Flüssigkeit-Wärmetauscher (5), der ein fluiddurchströmtes Kühl-/Heizelement mit einer Fluidleitung, in der ein Wärmetransportmedium geführt ist, umfasst, wobei der zumindest eine Luft-Flüssigkeit-Wärmetauscher (5) im Einbauzustand des Fenstermoduls (1) oben, horizontal liegend, in dem Zwischenraum (4) angeordnet ist, so dass er von Luft aus dem Zwischenraum (4) durchströmbar ist;
- ein in dem Zwischenraum (4) angeordnetes Trennelement (19), das eine verstellbare Sonnenschutzfunktion umfasst, die bei ihrer Aktivierung im Wesentlichen parallel zu der Außenverglasung (2) und der Innenverglasung (3) verläuft und den Zwischenraum (4) in einen inneren Zwischenraum (4I) und einen äußeren Zwischenraum (4A) unterteilt, um eine steigende und eine fallende Luftströmung in dem Zwischenraum (4) zu erzeugen, wobei die Sonnenschutzfunktion in dem Kühlbetrieb aktivierbar und in dem Heizbetrieb aktivierbar und deaktivierbar ist;
**dadurch gekennzeichnet, dass**
- die Außenverglasung (2) einen kleineren Wärmedurchgangskoeffizient (Uₐ) als die Innenverglasung (3) aufweist, um über die Innenverglasung (3) das Gebäudeinnere thermisch zu regulieren;
- der zumindest eine Luft-Flüssigkeit-Wärmetauscher (5) im Einbauzustand des Fenstermoduls (1) alternativ oder zusätzlich unten, horizontal liegend, in dem Zwischenraum (4) angeordnet ist; und
- zumindest ein Lüfter (10) in dem Zwischenraum (4) angeordnet ist, der in mehreren Betriebsmodi des Fenstermoduls (1), die einen Kühlbetrieb und einen Heizbetrieb umfassen, betreibbar ist, wobei zumindest in dem Kühlbetrieb durch den zumindest einen Lüfter (10) Luft durch den zumindest einen Luft-Flüssigkeit-Wärmetauscher (5) geführt wird, um Wärme zwischen der Luft und dem Wärmetransportmedium auszutauschen und um die Luft in dem Zwischenraum (4) in einem Kreislauf zu führen.

2. Fenstermodul nach Anspruch 1, **dadurch gekennzeichnet, dass** der Wärmedurchgangskoeffizient (Uₐ) der Außenverglasung (2) mindestens um den Faktor 3, insbesondere um den Faktor 5 oder grösser, kleiner als der Wärmedurchgangskoeffizient (Uᵢ) der Innenverglasung (3) ist.

3. Fenstermodul nach Anspruch 1 oder 2, **dadurch gekennzeichnet, dass** der zwischen der Außenverglasung (2) und der Innenverglasung (3) gebildete Zwischenraum (4) größer als 150 mm ist.

4. Fenstermodul nach einem der vorhergehenden Ansprüche, **dadurch gekennzeichnet, dass** durch das Trennelement (19) der aus dem Luft-Flüssigkeit-Wärmetauscher (5) austretende Luftstrom in den inneren Zwischenraum (4I) geführt wird, um über den äußeren Zwischenraum (4A) zurückgeführt zu werden.

5. Fenstermodul nach einem der vorhergehenden Ansprüche, **dadurch gekennzeichnet, dass** das Trennelement (19) eine Sonnenschutzvorrichtung (11) aus einem Sonnenstrahlung absorbierenden und reflektierenden Material umfasst, die derart verstellbar ist, dass die Tageslichtstärke im Nutzraum einstellbar ist.

6. Fenstermodul nach Anspruch 5, **dadurch gekennzeichnet, dass** das Trennelement (19) eine feststehende transparente Trennwand (15) umfasst, die zwischen der Sonnenschutzvorrichtung (11) und der Innenverglasung (3) parallel beabstandet zu der Innenverglasung (3) angeordnet ist.

7. Fenstermodul nach einem der vorhergehenden Ansprüche, **dadurch gekennzeichnet, dass** der zumindest eine Lüfter (10) im Einbauzustand des Fenstermoduls (1) unten und/oder oben in dem Zwischenraum (4) und in Strömungsrichtung unmittelbar vor dem Luft-Flüssigkeit-Wärmetauscher (5) angeordnet ist.

8. Fenstermodul nach einem der vorhergehenden Ansprüche, **dadurch gekennzeichnet, dass** im Kühlbetrieb oder im Heizbetrieb der von dem zumindest einen Lüfter (10) im inneren oder äußeren Zwischenraum (4) forcierte Luftstrom entgegen dem natürlichen Auftrieb erzeugt wird.

9. Fenstermodul nach einem der vorhergehenden Ansprüche, **dadurch gekennzeichnet, dass** der Zwischenraum (4) gegenüber dem konditionierten Nutzraum diffusionsoffen konstruiert ist.

10. Fenstermodul nach einem der vorhergehenden Ansprüche, **dadurch gekennzeichnet, dass** der Fluidleitung ein Wärmespeicher (50) zugeordnet ist, um Wärme von dem Wärmetransportmedium aufzunehmen und zu speichern oder gespeicherte Wärme an das Wärmetransportmedium abzugeben.

11. Verfahren zur thermischen Regulierung eines Gebäudes mittels eines Fenstermoduls, wobei das Fenstermodul umfasst:
- eine Außenverglasung (2) und eine Innenverglasung (3), wobei zwischen der Außenverglasung (2), die einen kleineren Wärmedurchgangskoeffizient (Uₐ) als die Innenverglasung (3) aufweist, und der Innenverglasung (3) ein gegenüber Feststoffen, insbesondere Staub, abgedichteter Zwischenraum (4) gebildet ist;
- einen Luft-Flüssigkeit-Wärmetauscher (5), der ein fluiddurchströmtes Kühl-/Heizelement mit einer Fluidleitung, in der ein Wärmetransportmedium geführt ist, umfasst, wobei der zumindest eine Luft-Flüssigkeit-Wärmetauscher (5) im Einbauzustand des Fenstermoduls (1) unten und/oder oben, horizontal liegend, in dem Zwischenraum (4) angeordnet ist, so dass er von Luft aus dem Zwischenraum (4) durchströmbar ist;
- ein in dem Zwischenraum (4) angeordnetes Trennelement (19), das eine verstellbare Sonnenschutzfunktion umfasst und den Zwischenraum (4) in einen inneren Zwischenraum (4I) und einen äußeren Zwischenraum (4A) unterteilt; und
- zumindest einen in dem Zwischenraum (4) angeordneten Lüfter (10), der in mehreren Betriebsmodi des Fenstermoduls (1), die einen Kühlbetrieb und einen Heizbetrieb umfassen, betreibbar ist;
**dadurch gekennzeichnet, dass**
- zumindest in dem Kühlbetrieb durch den zumindest einen Lüfter (10) Luft durch den zumindest einen Luft-Flüssigkeit-Wärmetauscher (5) geführt wird, um Wärme zwischen der Luft und dem Wärmetransportmedium auszutauschen und um die Luft in dem Zwischenraum (4) in einem Kreislauf zu führen;
- die Sonnenschutzfunktion in dem Kühlbetrieb aktiviert wird, so dass diese im Wesentlichen parallel zu der Außenverglasung (2) und der Innenverglasung (3) zur Trennung der steigenden und der fallenden Luftströmung in dem Zwischenraum (4) verläuft; und
- die Sonnenschutzfunktion in dem Heizbetrieb deaktiviert wird.

12. Verfahren nach Anspruch 11, **dadurch gekennzeichnet, dass** in einem Kühlbetrieb durch das Wärmetransportmedium der Luft aus dem Fenstermodul Wärme entzogen wird, die über einen Wärmetauscher (51) zur Regenerierung eines Wärmespeichers (50), insbesondere eines Energiespeichers, genutzt wird.

13. Verfahren nach Anspruch 11, **dadurch gekennzeichnet, dass** in einem Heizbetrieb über das Wärmetransportmedium einem Wärmespeicher (50) Wärme entzogen, mittels einer Wärmepumpe (52) auf die notwendige Temperatur gebracht und an die Luft in dem Fenstermodul (1) abgegeben wird.

14. Verfahren nach Anspruch 12 oder 13, **dadurch gekennzeichnet, dass** der Wärmespeicher (50) zwei räumlich getrennte Erdsondenfelder umfasst, wobei die Betriebsarten des Kühlens und des Heizens so gesteuert werden, dass die Raumkühlung möglichst lange ohne die Wärmepumpe und beim Heizen die Wärmepumpe (52) mit möglichst großem COP betrieben werden kann.

15. Kühl- und Heizsystem für Gebäude mit zumindest einem Fenstermodul gemäß einem der Ansprüche 1 bis 10, dessen Wärmetransportmedium mit einem Wärmespeicher (50), insbesondere einem Energiespeicher, zugeordnet ist, um Wärme von dem Wärmetransportmedium aufzunehmen und zu speichern oder gespeicherte Wärme an das Wärmetransportmedium abzugeben.

## Claims

1. A window module (1) for the thermal regulation, comprising heating or cooling, of a building, comprising:
- an outer glazing (2) and an inner glazing (3) wherein between the outer glazing (2) and the inner glazing (3) an intermediate space (4) sealed off against solid materials, in particular dust, is formed;
- at least one air-liquid heat exchanger (5), which comprises a cooling/heating element, through which a fluid flows, with a fluid line in which a heat transporting medium is conveyed, wherein when the window module (1) is installed the at least one air-liquid heat exchanger (5) is arranged at the top, lying horizontally, in the intermediate space (4) so that air can flow through it from the intermediate space (4);
- a separating element (19), arranged in the intermediate space (4), which comprises an adjustable solar protection function, which on activation extends essentially in parallel to the outer glazing (2) and the inner glazing (3) and separates the intermediate space (4) into an inner intermediate space (41) and an outer intermediate space (4A) in order to produce a rising and falling air flow in the intermediate space (4), wherein the solar protection function can be activated in cooling operation and activated and deactivated in heating operation,
**characterised in that**
- the outer glazing (2) has a lower thermal transmittance (Uₐ) than the inner glazing (3) in order to thermally regulate the interior of the building via the inner glazing (3);
- when the window module (1) is installed the at least one air-liquid heat exchanger (5) is alternatively or additionally arranged at the bottom, lying horizontally, in the intermediate space (4); and
- at least one fan (10) is arranged in the intermediate space (4) which can be operated in several operating modes of the window module (1), which include cooling operation and heating operation, wherein at least in cooling operation by way of the at least one fan (10) air is conveyed through the at least one air-liquid heat exchanger (5) in order to exchange heat between the air and the heat transporting medium and to convey the air in the intermediate space (4) in a circulation.

2. The window module according to claim 1, **characterised in that** the thermal transmittance (Uₐ) of the outer glazing (2) is lower by at least a factor of 3, in particular by a factor of 5 or more than the thermal transmittance (Uᵢ) of the inner glazing (3).

3. The window module according to claim 1 or 2, **characterised in that** the intermediate space (4) formed between the outer glazing (2) and the inner glazing (3) is greater than 150 mm.

4. The window module according to any one of the preceding claims, **characterised in that** through the separating element (19) the air flow emerging from the air-liquid heat exchanger (5) is conveyed into the inner intermediate space (41) in order to be returned via the outer intermediate space (4A).

5. The window module according to any one of the preceding claims, **characterised in that** the separating element (19) comprises a solar protection device (11) made of a material that absorbs and reflects solar radiation, which is adjustable so that the intensity of the daylight in the useable space can be set.

6. The window module according to claim 5, **characterised in that** the separating element (19) comprises a stationary transparent separating wall (15) which is arranged between the solar protection device (11) and the inner glazing (3) at a distance in parallel to the inner glazing (3).

7. The window module according to any one of the preceding claims, **characterised in that** when the window module (1) is installed the at least one fan (10) is arranged at the bottom and/or top in the intermediate space (4) and immediately before the air-liquid heat exchanger (5) in the direction of flow.

8. The window module according to any one of the preceding claims, **characterised in that** in cooling operation or in heating operation the airflow forced by the at least one fan (10) in the inner or outer intermediate space (4) is produced contrary to the natural upwards movement.

9. The window module according to any one of the preceding claims, **characterised in that** the intermediate space (4) is designed to be open to diffusion in contrast to the conditioned room.

10. The window module according to any one of the preceding claims, **characterised in that** assigned to the fluid line is a heat accumulator (50) for taking up and storing heat from the heat transporting medium or to give off stored heat to the heat transporting medium.

11. A method of thermally regulating a building by means of a window module, wherein the window module comprises:
- an outer glazing (2) and an inner glazing (3) wherein between the outer glazing (2), which has a lower thermal transmittance (Uₐ) than the inner glazing, and the inner glazing (3) an intermediate space (4) sealed off against solid materials, in particular dust, is formed;
- an air-liquid heat exchanger (5), which comprises a cooling/heating element, through which a fluid flows, with a fluid line in which a heat transporting medium is conveyed, wherein the at least one air-liquid heat exchanger (5) when the window module (1) is installed is arranged at the bottom and/or the top, lying horizontally, in the intermediate space (4) so that air can flow through it from the intermediate space (4);
- a separating element (19), arranged in the intermediate space (4), which comprises an adjustable solar protection function and separates the intermediate space (4) into an inner intermediate space (41) and an outer intermediate space (4A); and
- at least one fan (10) arranged in the intermediate space (4) which can be operated in several operating modes of the window module (1) which comprise a cooling operation and heating operation;
**characterised in that**
- at least in cooling operation by way of the at least one fan (10), air is conveyed through the at least one air-liquid heat exchanger (5) in order to exchange heat between the air and the heat transporting medium and to convey the air in the intermediate space (4) in a circulation;
- the solar protection function is activated in cooling operation so that it extends essentially in parallel to the outer glazing (2) and the inner glazing (3) to separate the rising and the falling air flow in the intermediate space (4); and
- the solar protection function is deactivated in heating operation.

12. The method according to claim 11, **characterised in that** in cooling operation, through the heat transporting medium heat is removed from the air from the window module which via an heat exchanger (51) is used to regenerate a heat accumulator (50), more particularly an energy storage system.

13. The method according to claim 11, **characterised in that** in heating operation, through the heat transporting medium heat is removed from a heat accumulator (50), brought to the required temperature by way of a heat pump (52) and is given off to the air in the window module (1).

14. The method according to claim 12 or 13, **characterised in that** the heat accumulator (50) comprises two spatially separated geothermal probe fields, wherein the cooling and heating operation mode are controlled in such a way that room cooling can be operated for as long as possible without the heat pump and during heating the heat pump (52) can be operated with as high a coefficient of performance as possible.

15. A cooling and heating system for a building with at least one window module according to any one of claims 1 to 10, the heat transporting medium of which is assigned to a heat accumulator (50) in particular an energy storage system, in order to take up and store heat from the heat transporting medium or to give off stored heat to the heat transporting medium.

## Revendications

1. Module de fenêtre (1) servant à la régulation thermique, comprenant un chauffage ou un refroidissement d'un bâtiment, comprenant :
- un vitrage extérieur (2) et un vitrage intérieur (3), entre le vitrage extérieur (2) et le vitrage intérieur (3) étant formé un espace intermédiaire (4) étanche aux solides, notamment à la poussière ;
- au moins un échangeur thermique air/liquide (5), qui comprend un élément de refroidissement/de chauffage traversé par un fluide, pourvu d'un conduit à fluide, dans lequel est guidé un milieu caloporteur, en position de montage du module de fenêtres (1), l'au moins un échangeur thermique air/liquide (5) étant placé en haut, situé à l'horizontale dans l'espace intermédiaire (4), de sorte à pouvoir être traversé par de l'air provenant de l'espace intermédiaire (4) ;
- un élément séparateur (19) placé dans l'espace intermédiaire (4) qui comprend une fonction de protection solaire réglable, qui lors de son activation s'écoule sensiblement à la parallèle du vitrage extérieur (2) et du vitrage intérieur (3) et qui divise l'espace intermédiaire (4) en un espace intermédiaire (41) interne et un espace intermédiaire (4A) externe, pour créer une circulation d'air ascendante et descendante dans l'espace intermédiaire (4), la fonction de protection solaire étant activable en mode refroidissement et étant activable et désactivable en mode chauffage ;
**caractérisé en ce que**
- le vitrage extérieur (2) fait preuve d'un coefficient de passage thermique (Uₐ) inférieur à celui du vitrage intérieur (3), pour réguler thermiquement par l'intermédiaire du vitrage intérieur (3) l'intérieur du bâtiment ;
- en position montée du module de fenêtre (1), l'au moins un échangeur thermique air/liquide (5) est placé en variante ou en supplément en bas, situé à l'horizontale dans l'espace intermédiaire (4) ; et
- au moins un ventilateur (10) est placé dans l'espace intermédiaire (4) qui est susceptible de fonctionner dans plusieurs modes de fonctionnement du module de fenêtre (1), qui comprennent un mode refroidissement et un mode chauffage, au moins en mode refroidissement par l'au moins un ventilateur (10), de l'air étant guidé à travers l'au moins un échangeur thermique air/liquide (5), pour échanger de la chaleur entre l'air et le milieu caloporteur et pour guider l'air dans l'espace intermédiaire (4) dans un circuit.

2. Module de fenêtre selon la revendication 1, **caractérisé en ce que** le coefficient de passage thermique (Uₐ) du vitrage extérieur (2) est inférieur d'au moins le facteur 3, notamment du facteur 5 ou plus au coefficient de passage thermique (Uᵢ) du vitrage intérieur (3).

3. Module de fenêtre selon la revendication 1 ou 2, **caractérisé en ce que** l'espace intermédiaire (4) formé entre le vitrage extérieur (2) et le vitrage intérieur (3) est supérieur à 150 mm.

4. Module de fenêtre selon l'une quelconque des revendications précédentes, **caractérisé en ce que** par l'élément séparateur (19), le flux d'air sortant de l'échangeur thermique air/liquide (5) est guidé à l'intérieur de l'espace intermédiaire (4I) interne, pour être recyclé par l'intermédiaire de l'espace intermédiaire (4A) externe.

5. Module de fenêtre selon l'une quelconque des revendications précédentes, **caractérisé en ce que** l'élément séparateur (19) comprend un dispositif de protection solaire (11) en une matière absorbant et réfléchissant le rayonnement solaire, qui est réglable de sorte à pouvoir ajuster l'intensité de la lumière diurne dans la pièce d'utilisation.

6. Module de fenêtre selon la revendication 5, **caractérisé en ce que** l'élément séparateur (19) comprend une cloison (15) transparente stationnaire, qui est placée entre le dispositif de protection solaire (11) et le vitrage intérieur (3), avec un écart parallèle par rapport au vitrage intérieur (3).

7. Module de fenêtre selon l'une quelconque des revendications précédentes, **caractérisé en ce qu'**en position montée du module de fenêtre (1), l'au moins un ventilateur (10) est placé en bas et/ou en haut dans l'espace intermédiaire (4) et dans la direction de circulation, directement à l'avant de l'échangeur thermique air/liquide (5).

8. Module de fenêtre selon l'une quelconque des revendications précédentes, **caractérisé en ce qu'**en mode refroidissement ou en mode chauffage, le flux d'air forcé par l'au moins un ventilateur (10) dans l'espace intermédiaire (4) interne ou externe est généré à l'encontre de la flottation naturelle.

9. Module de fenêtre selon l'une quelconque des revendications précédentes, **caractérisé en ce que** l'espace intermédiaire (4) est conçu de manière ouverte à la diffusion par rapport à la pièce d'utilisation conditionnée.

10. Module de fenêtre selon l'une quelconque des revendications précédentes, **caractérisé en ce qu'**au conduit à fluide est associé un accumulateur thermique (50), pour prélever et accumuler de la chaleur du milieu caloporteur ou pour restituer de la chaleur accumulée au milieu caloporteur.

11. Procédé, destiné à assurer la régulation thermique d'un bâtiment au moyen d'un module de fenêtre, le module de fenêtre comprenant :
- un vitrage extérieur (2) et un vitrage intérieur (3), entre le vitrage extérieur (2) qui fait preuve d'un coefficient de passage thermique (Uₐ) inférieur à celui du vitrage intérieur (3) et le vitrage intérieur (3) étant formé un espace intermédiaire (4) étanche aux solides, notamment à la poussière ;
- au moins un échangeur thermique air/liquide (5), qui comprend un élément de refroidissement/de chauffage traversé par un fluide, pourvu d'un conduit à fluide, dans lequel est guidé un milieu caloporteur, en position de montage du module de fenêtres (1), l'au moins un échangeur thermique air/liquide (5) étant placé en haut, situé à l'horizontale dans l'espace intermédiaire (4), de sorte à pouvoir être traversé par de l'air provenant de l'espace intermédiaire (4) ;
- un élément séparateur (19) placé dans l'espace intermédiaire (4) qui comprend une fonction de protection solaire réglable, et qui divise l'espace intermédiaire (4) en un espace intermédiaire (4I) interne et un espace intermédiaire (4A) externe, et ;
- au moins un ventilateur (10) placé dans l'espace intermédiaire (4) qui est susceptible de fonctionner dans plusieurs modes de fonctionnement du module de fenêtre (1), qui comprennent un mode refroidissement et un mode chauffage ;
**caractérisé en ce que**
- au moins en mode refroidissement, par l'au moins un ventilateur (10), de l'air est guidé à travers l'au moins un échangeur thermique air/liquide (5), pour échanger de la chaleur entre l'air et le milieu caloporteur et pour guider l'air dans l'espace intermédiaire (4) dans un circuit ;
- la fonction de protection solaire s'active en mode refroidissement, de sorte qu'elle s'écoule sensiblement à la parallèle du vitrage extérieur (2) et du vitrage intérieur (3), pour séparer la circulation d'air ascendante et descendante dans l'espace intermédiaire (4) ; et
- la fonction de protection solaire est désactivée en mode chauffage.

12. Procédé selon la revendication 11, **caractérisé en ce que** dans un mode refroidissement, par le milieu caloporteur de l'air, de la chaleur est prélevée hors du module de fenêtre qui est utilisée par l'intermédiaire d'un échangeur thermique (51) la régénération d'un accumulateur thermique (50), notamment d'un accumulateur d'énergie.

13. Procédé selon la revendication 11, **caractérisé en ce que** dans un mode chauffage, par le milieu caloporteur de la chaleur est prélevée à partir d'un accumulateur thermique (50), amenée à la température nécessaire au moyen d'une pompe à chaleur (52) et restituée à l'air dans le module de fenêtre (1).

14. Procédé selon la revendication 12 ou 13, **caractérisé en ce que** l'accumulateur thermique (50) comprend deux zones physiquement séparées de sonde géothermique, les modes de fonctionnement du refroidissement et du chauffage étant commandés de telle sorte que le refroidissement de la pièce puisse fonctionner le plus longtemps possible sans la pompe à chaleur, et que lors d'un chauffage, la pompe à chaleur (52) puisse fonctionner avec le COP le plus élevé possible.

15. Système de refroidissement et de chauffage pour bâtiment, pourvu d'au moins un module de fenêtre selon l'une quelconque des revendications 1 à 10, dont le milieu caloporteur est associé à un accumulateur thermique (50), notamment un accumulateur d'énergie, pour prélever et accumuler de la chaleur à partir du milieu caloporteur ou pour restituer de la chaleur au milieu caloporteur.
